(19) Europäisches Patentamt
European Patent Office
Office européen des brevets

(11) **EP 3 536 515 A1**

(12) **EUROPEAN PATENT APPLICATION**
published in accordance with Art. 153(4) EPC

(43) Date of publication:
**11.09.2019 Bulletin 2019/37**

(51) Int Cl.:
**B42D 25/29** *(2014.01)*     **B42D 25/309** *(2014.01)*

(21) Application number: **17867443.8**

(22) Date of filing: **06.11.2017**

(86) International application number:
**PCT/JP2017/039934**

(87) International publication number:
**WO 2018/084283 (11.05.2018 Gazette 2018/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **04.11.2016   JP 2016216469**

(71) Applicant: **NTI, Inc.**
**Yokkaichi-shi**
**Mie 510-8021 (JP)**

(72) Inventor: **NAKAMURA, Takatoshi**
**Yokkaichi-shi**
**Mie 510-8021 (JP)**

(74) Representative: **Gill Jennings & Every LLP**
**The Broadgate Tower**
**20 Primrose Street**
**London EC2A 2ES (GB)**

(54) **MONEY VOUCHER**

(57)     A safer settlement system as an alternative to a settlement system using a credit card is provided. The settlement system has a user terminal, a settlement device, and a settlement terminal. First, the user terminal receives inputting of a user ID, a password, and money amount information specifying a money amount (S912), and transfers the same to the settlement device (S913). The settlement device performs credit determination (S922), generates provisional permission information if credit is possible (S923) and transfers the same to the user terminal (S924). The user terminal generates a one-time password (S915). The one-time password is input to the settlement terminal (S931). If the one-time password transferred from the settlement terminal to the settlement device is same as a one-time password produced by the settlement device (S926), the settlement device authorizes user's payment (S927).

(A)

25000 YEN

OTP1:015638

F

(B)

OTP2：94451

F

FIG. 20

**Description**

**Technical Field**

The present invention relates to a money voucher.

**Background Art**

The inventor of the present application has disclosed a novel settlement system as an alternative to a credit card. The settlement system includes a user terminal, a settlement terminal, and a settlement device capable of performing communication therewith through the Internet or another network.

The related techniques have been filed as Japanese patent applications such as Japanese Patent Application No. 2015-243564, Japanese Patent Application No. 2015-250700, and Japanese Patent Application No. 2015-256028.

The following describes an outline of the settlement system. The user terminal is owned by a user who performs a payment, includes a computer, and is typically a smartphone or a tablet. The settlement terminal is managed by a person who receives the payment, for example, a worker (such as an administrator) of a shop or a restaurant, and corresponds to a credit card reader and a computer connected with the same in the conventional system using a credit card. The settlement device is a device that determines whether to perform a settlement, and corresponds to a credit card company in the conventional system using a credit card.

To perform a settlement in such a settlement system, the user transmits money amount information as information of a money amount that the user desires to pay to the administrator or the like, and user information as information used to specify the user or the own user terminal from the user terminal to the settlement device through the Internet. When having received the same, the settlement device performs authentication of the user by using, for example, the user information, and then performs credit determination of whether the user can pay the money amount specified by the money amount information sent by the user. Similarly to the credit determination when a conventional credit card is used, the credit determination may be performed in accordance with the accumulation degree of the credibility of the user about various items, or may be simply performed in accordance with the magnitude relation between the balance of the bank account of the user specified by the user and the money amount specified by the money amount information, which is performed in practical in a case of a debit card. In any case, when a result of the credit determination is positive, the settlement system provisionally determines the payment by the user, and provisional permission information as information that the payment is provisionally determined is transferred from the settlement device to the user terminal.

When having received the provisional permission information, the user terminal generates a one-time password. The one-time password is a number, a character, a symbol, or a series thereof, and has, for example, 10 digits to 30 digits approximately or a larger number of digits. For example, the technology of generating a one-time password by using a token has been publicly known in the field of Internet banking. The user terminal may use such a publicly known or already known technology to generate a one-time password. A one-time password is generated each time the user desires to perform a payment by using the settlement system, and thus one-time passwords are generated a large number of times. The user terminal has the function of generating such a one-time password as, for example, a software token.

The user passes the one-time password generated at the user terminal to the administrator or the like of the settlement terminal, who receives the payment from the user. Such passing of the one-time password from the user to the administrator or the like corresponds to passing of a credit card number from the user to the administrator or the like in the conventional system using a credit card. The administrator or the like inputs the one-time password received from the user to the settlement terminal by some means, and transfers the one-time password to the settlement device through the Internet.

As in the above-described technology using a token in the field of Internet banking, the settlement device can generate a one-time password same as a one-time password generated by each token. When the one-time password transferred from the settlement terminal and the one-time password generated in the settlement device match each other, the settlement device recognizes that the one-time password is valid. As described above, before the one-time password is generated at the user terminal, how much the user desires to pay with the one-time password is specified by the money amount information in advance. When having recognized the one-time password is valid, the settlement device performs a payment or settlement of the amount of money corresponding to the money amount information associated with the one-time password to the administrator of the settlement terminal. When the one-time password generated by the settlement device does not match the one-time password transferred from the user through the settlement terminal, the settlement device does not allow the settlement.

Unlike the credit card number of a normal credit card, which does not correspond to the money amount to be paid, the user terminal and the settlement device in the settlement system as described above each generate the one-time password corresponding to the money amount to be paid in a one-to-one relation, and the one-time password generated by the user terminal is used as a temporary credit card number for allowing a payment of a certain money amount, for example, once.

Unlike the conventional credit card system with which fraudulent use by a malicious third person cannot be prevented when the credit card number is stolen by the third person, such a settlement system has an advantage that, since a one-time password that functions only as a temporary credit card number is used in place of the credit card number, the safety thereof significantly increases as compared to the conventional settlement system using a credit card.

Through further studies on such a settlement system, the inventor of the present application has found that the settlement system has further capability in addition to the above-described advantage.

That is the capability of the one-time password generated by the user terminal. As described above, the credit card number of a normal credit card is not related to a money amount that can be paid with the credit card number. Although the credit card number has an upper limit money amount that can be paid with the credit card number, the credit card number normally has no limitation for each payment. However, in the above-described settlement system achieved by the inventor of the present application, the one-time password generated by the user terminal is set with the money amount of a payment for which a settlement can be performed with the one-time password for performing, for example, one payment.

It is said that the nature of currency is in its role as the agent of value exchange and its capability of value storage over time. Thus, since the above-described one-time password can allow a payment when issued and can store a value at least until the one-time password is passed to the administrator of the settlement terminal, the one-time password has properties as currency. Accordingly, the above-described one-time password can function as what is called virtual currency.

## Summary of Invention

### Technical Problem

In the above-described one-time password, a series of numbers and the like included in the one-time password, in other words, information itself has a monetary value. Such a value does not need to have a substance, and can be passed from the user to the administrator or the like of the settlement terminal through electronic data as an agent, but can be passed without electronic data as an agent by, for example, orally telling the one-time password or showing the one-time password to the administrator or the like, when involved extra work is ignored.

This is a large advantage and a disadvantage. With the recent tendency of an increasing number of topics about fintech technologies, currency may eventually lose a substance, but at least current people are familiar with currency having a physical substance. In particular, this is true for aged people. For this reason, matching with a traditional sense that people has for currency is requested to spread technologies for causing a one-time password to function as currency.

This problem is not limited to the above-described settlement system achieved by the inventor of the present application or its generation method is not limited, but is common to virtual currencies in which information has a monetary value.

It is an object of the present application invention to provide a technology for further generalizing virtual currency in which information itself has a monetary value.

### Solution to Problem

To achieve the object, the inventor of the present application discloses an invention described below.

The present application invention is a money voucher comprising, a paper sheet, and monetary information printed on the paper sheet, wherein the monetary information is made of a number, a character, a symbol, or a series thereof and has a monetary value. The money voucher in the present application typically includes virtual currency, crypto currency, regional currency, gift voucher, coupon, certificate, bond, and the like, which are a money voucher generated by printing monetary information on a paper sheet and despite of its name. The monetary information printed on the paper sheet (monetary information except for the paper sheet) has a monetary value (in a restricted sense, a monetary value that can be used for settlement). With such a money voucher, a user can pass monetary information as information having a monetary value, which is exemplified by a one-time password described in the background art, by passing the money voucher to a person who receives a payment. In other words, the money voucher can be used like typical currency (or banknote) to perform a payment to a person who receives the payment, and thus can be used without a discomfort by a user familiar with the traditional currency, and accordingly, no problem is likely to occur to its spread.

Moreover, the monetary information of such a money voucher is a number, a character, a symbol, or a series thereof, and is not difficult to print through a typical printer such as a household printer even when the number of digits of numbers and the like is large. Accordingly, no problem is likely to occur to spread of the money voucher in terms of printing as well.

A person who has received the money voucher and receives a payment can, for example, visually recognize the monetary information printed on the money voucher, and input, by using an input device such as a numeric keypad or a keyboard, the monetary information to a settlement terminal as a device that transfers the monetary information to a settlement device through the Internet as described in the background art. Alternatively, the person who receives the payment can obtain image data through image capturing of the monetary information printed on the money voucher, and input the monetary information read from the image data to the settlement terminal as described above.

The monetary information may be provided with a payment condition (for example, a payment deadline) with which a payment is allowed by using the monetary information. When such a payment condition is provided, the money voucher becomes clearly different from typical currency.

As described above, the money voucher according to the present application invention has a large number of advantages. However, its spread requires safety stronger than that of the conventional currency.

For example, when the money voucher according to the present application invention is lost by the user or stolen by a third person, the money voucher is potentially used by the third person like a case in which a normal banknote is lost by the user or stolen by a third person. However, the probability of fraudulent use is smaller than a normal banknote when the monetary information printed on the money voucher is provided with a condition such as the deadline of a payment or limitation on a payee.

However, as another problem, the money voucher has such a risk not occurring to a normal banknote that, when the monetary information printed on the money voucher is known by a third person, the monetary information is potentially used by the third person so that the monetary value of the money voucher or the monetary information printed on the money voucher is lost while the money voucher exists at the user. Since it is difficult for the user having the money voucher to know that the monetary information printed on the money voucher is stolen by a third person, it is difficult to find and solve such a problem even if such a problem occurs.

Thus, the inventor of the present application discloses, as a technology for preventing the occurrence of such a status, a money voucher in which part of the monetary information is printed on one of surfaces of the paper sheet, and the rest of the monetary information is printed on the other surface of the paper sheet. With such a money voucher, when trying to steal the monetary information printed on the money voucher, a malicious third person needs to see (or take a picture of) both surfaces of the money voucher, and thus the probability that the monetary information is stolen significantly decreases as compared to a case in which the monetary information is printed only on one surface of the paper sheet.

The inventor of the present application also discloses, as another aspect of the present application invention, a money voucher comprising, a paper sheet, and specification information printed on the paper sheet and to specify monetary information, wherein the monetary information is made of a number, a character, a symbol, or a series thereof and has a monetary value.

In such a money voucher, not the monetary information but the specification information specifying the monetary information and corresponding to the monetary information in, for example, a one-to-one relation is printed on the paper sheet. Like the above-described money voucher on which the monetary information is printed, such a money voucher on which the specification information is printed can be used like typical currency to perform a payment to a person who receives the payment, and thus can be used without a discomfort by a user familiar with the traditional currency, and accordingly, no problem is likely to occur to its spread.

The specification information is, for example, a one-dimensional or two-dimensional bar code. Other information may be employed as the specification information.

It is sufficient that the specification information has the amount of information that can specify the monetary information, and similarly to the monetary information, the specification information is not difficult to print through a typical printer. Thus, no problem is likely to occur to the spread of such a money voucher in terms of printing as well. For example, printing of a bar code can be sufficiently performed by a household printer.

In addition, the money voucher on which the specification information is printed has another advantage. The specification information is obtained by performing some reversible conversion on the monetary information. At least when seeing the money voucher on which such specification information is printed, a malicious third person cannot immediately know the monetary information. Thus, the money voucher on which the specification information is printed is at least safer than the money voucher on which the monetary information is printed.

A person who has received the money voucher on which the specification information is printed and receives a payment can read the specification information printed on the money voucher through a reader, for example, a bar code reader when the specification information is a bar code, and can input from the bar code reader to the settlement terminal as a device that transfers the monetary information to the settlement device through the Internet as described in the background art.

The money voucher having the specification information may be as described below.

The specification information may be made of first specification information used to specify part of the monetary information, and second specification information used to specify the rest of the monetary information, the first specification information being printed on one of surfaces of the paper sheet, the second specification information being printed on the other surface of the paper sheet.

With this configuration, the safety increases for a reason same as that in the case of the above-described money voucher in which the monetary information is printed on both of the front and back surfaces of the paper sheet. When the first specification information and the second specification information are printed on both of the front and back surfaces of the paper sheet, respectively, a malicious third person needs to read both of the first specification information and the second specification information on both surfaces of such a money voucher through a reader such as a bar code reader or at least capture images of both pieces of information, when stealing the monetary information and the specification information of the money voucher. The difficulty is significantly high, and thus the safety of the money voucher is high.

The specification information may be made of third specification information and fourth specification information used together to specify the monetary information, the third specification information being printed on one of surfaces of the paper sheet, the fourth specification information being printed on the other surface of the paper sheet. With such a money voucher, the probability that the monetary information is stolen by a third person is low, similarly to the money voucher in which the first specification information and the second specification information are printed on the front and back surfaces of the paper sheet, respectively. As exemplary third and fourth specification information, the third specification information specifies a string that includes the monetary information and is longer than the monetary information, and the fourth specification information specifies which part of the long string specified by the third specification information is the monetary information.

Each money voucher described so far is highly safe to some extent, but when the money voucher as a physical substance is obtained by a third person, it is difficult to prevent fraudulent use thereof. Thus, the inventor of the present application also discloses a money voucher, fraudulent use of which by a third person can be prevented to some extent in the above-described situation. The money voucher is as follows.

Although the above describes a money voucher in which the monetary information is printed on a paper sheet and a money voucher in which the specification information is printed on a paper sheet, the face (face picture) of a person expected to use each money voucher may be printed on the paper sheet included in the money voucher.

With such a money voucher, when a person expected to receive a payment from the user has received the money voucher, it is checked whether the face printed on the money voucher matches the face of a user having passed the money voucher, and processing (for example, inputting of the monetary information written on the money voucher to the settlement terminal) necessary for a settlement with the money voucher is performed only when the check is successful, so that fraudulent use (unauthorized settlement) of the monetary information or the specification information can be prevented when the money voucher is lost or stolen by a third person. Such prevention of fraudulent use of the money voucher adds the function of face authentication to the money voucher, but it is impossible to add such a function to currently used currency. Accordingly, the safety of the money voucher exceeds that of typical currency.

The face printed on the money voucher does not need to match the face of a person having issued the monetary information or the specification information printed on the money voucher. The printed face needs to match the face of a person expected to use the money voucher. When a person expected to use a money voucher on which a face is printed once is changed, and the monetary information printed on the money voucher or the monetary information specified by the specification information printed on the money voucher is still effective, the original money voucher may be discarded, and a new money voucher on which the face of a new person expected to use the money voucher is printed may be printed again and used.

**Brief Description of Drawings**

FIG. 1 is a diagram illustrating the entire configuration of a settlement system according to a first embodiment;
FIG. 2 is a diagram illustrating the appearance of a user terminal included in the settlement system illustrated in FIG. 1.
FIG. 3 is a diagram illustrating a hardware configuration of the user terminal included in the settlement system illustrated in FIG. 1;
FIG. 4 is a block diagram illustrating functional blocks generated inside the user terminal included in the settlement system illustrated in FIG. 1;
FIG. 5 is a diagram illustrating a hardware configuration of a settlement device included in the settlement system illustrated in FIG. 1;
FIG. 6 is a block diagram illustrating functional blocks generated inside the settlement device included in the settlement system illustrated in FIG. 1;
FIG. 7 is a diagram illustrating exemplary data recorded in a credit information recording unit illustrated in FIG. 6;

FIG. 8 is a diagram illustrating exemplary data recorded in a position information recording unit illustrated in FIG. 6;

FIG. 9 is a diagram illustrating exemplary data recorded in an OTP information recording unit illustrated in FIG. 6;

FIG. 10 is a diagram illustrating a hardware configuration of a settlement terminal included in the settlement system illustrated in FIG. 1;

FIG. 11 is a block diagram illustrating functional blocks generated inside the settlement terminal included in the settlement system illustrated in FIG. 1;

FIG. 12 is a diagram illustrating an exemplary image displayed on a display of the user terminal included in the settlement system illustrated in FIG. 1;

FIG. 13 is a diagram illustrating another exemplary image displayed on the display of the user terminal included in the settlement system illustrated in FIG. 1;

FIG. 14 is a diagram illustrating an exemplary image displayed on a display of the settlement terminal included in the settlement system illustrated in FIG. 1;

FIG. 15 is a diagram illustrating the flow of processing executed when settlement is performed in the settlement system illustrated in FIG. 1;

FIG. 16 is a diagram illustrating an exemplary image displayed on the display of the user terminal when cancellation of settlement is performed in the settlement system illustrated in FIG. 1;

FIG. 17 is a diagram illustrating an exemplary image displayed on the display of a user terminal included in a settlement system according to a second embodiment;

FIG. 18 is a block diagram illustrating functional blocks generated inside the user terminal included in the settlement system according to the second embodiment;

FIG. 19 is a diagram illustrating an exemplary image displayed on the display of the user terminal included in the settlement system according to the second embodiment;

FIG. 20 is a diagram illustrating an exemplary money voucher used in the first embodiment; and

FIG. 21 is a diagram illustrating another exemplary money voucher used in the first embodiment.

## Description of Embodiments

The following describes first and second embodiments of the present invention. In description of the embodiments and modifications, an identical component is denoted by an identical reference sign, and duplicate description thereof will be omitted in some cases.

The first and second embodiments and the modifications thereof described below each relate to a settlement system, and a money voucher according to the present application invention is used in the settlement system. Each settlement system described below in which the money voucher according to the present application invention is used is merely exemplary, and may be used in another settlement system.

<<First embodiment>>

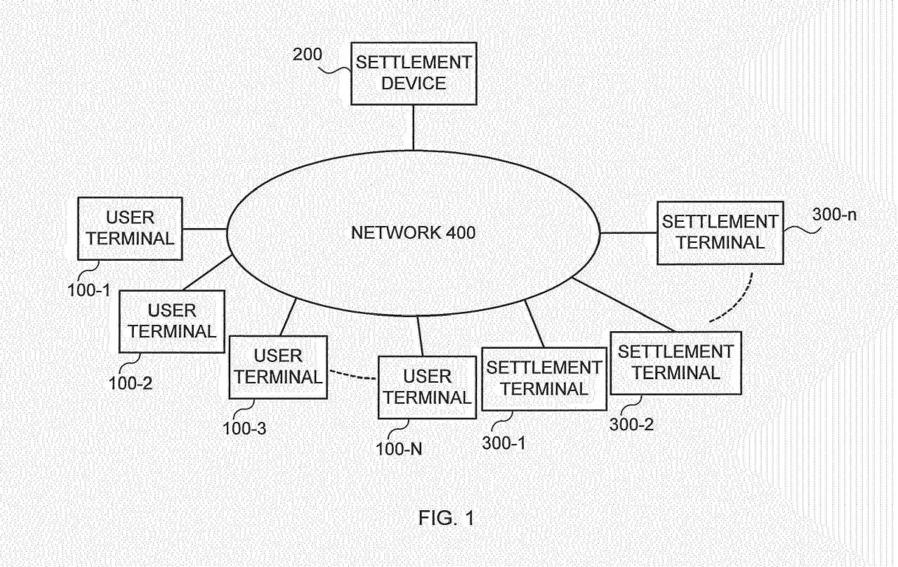

FIG. 1 schematically illustrates the entire configuration of the settlement system according to the first embodiment.

The settlement system includes a plurality of user terminals 100-1 to 100-N (hereinafter also collectively referred to as "user terminal 100"), a settlement device 200, and settlement terminals 300-1 to 300-n (hereinafter also collectively referred to as "settlement terminal 300"). These are all connectable to a network 400.

The network 400 is, although not limited to, the Internet in the present embodiment.

The user terminal 100 corresponds to a user terminal described in the background art of the present application, and includes a computer. More specifically, the user terminal 100 in the present embodiment is achieved by a general-purpose computer. In the present embodiment, description is made on the assumption that each user owns one user terminal 100, but each user may own a plurality of user terminals 100. In an example with a settlement system using a credit card or a debit card, one person owns a plurality of credit cards or debit cards. For example, when a plurality of different computer programs (this will be described later) distributed by the administrators of the settlement devices 200 different from each other are installed on one user terminal 100, the user only needs to own the one user terminal 100 to perform settlement at the plurality of settlement devices 200 through the one user terminal 100. This is similar to a state in which the user owns a plurality of credit cards in a conventional settlement system using a credit card. However, with the settlement system in the present embodiment, the user does not need to own the bulk of a plurality of credit cards.

The following describes the configuration of the user terminal 100. The configurations of the user terminals 100-1 to 100-N are basically same.

The user terminal 100 is a cellular phone, a smartphone, a tablet, a laptop personal computer, a desktop personal computer, or the like. Among these devices, the smartphone or the tablet is preferably used as the user terminal 100 because they are portable and suitable for installation of a computer program to be described later. The smartphone is, for example, iPhone (trademark) manufactured and sold by Apple Japan, Inc. The tablet is, for example, iPad (trademark) manufactured and sold by Apple Japan, Inc. In the following description, the user terminal is, although not limited to, the smartphone.

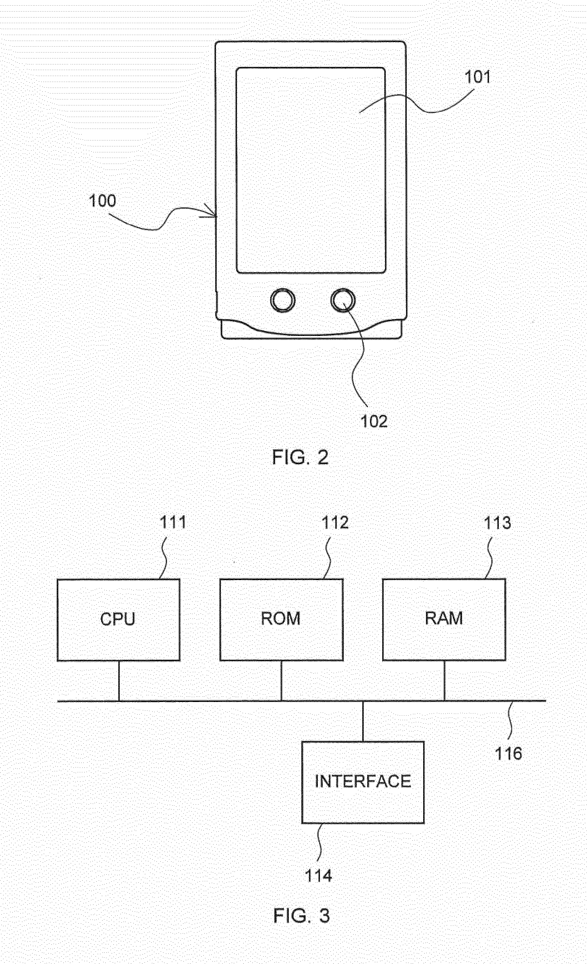

FIG. 2 illustrates exemplary appearance of the user terminal 100.

The user terminal 100 includes a display 101. The display 101 is used to display a still image or a moving image, and may be a publicly known or already known device. The display 101 is, for example, a liquid crystal display. The user terminal 100 includes an input device 102. The input device 102 is a device through which the user performs desired input to the user terminal 100. The input device 102 may be a publicly known or already known device. The input device 102 of the user terminal 100 in the embodiment is a button type, but not limited thereto, and may be a numeric keypad, a keyboard, a truck ball, a mouse, or the like. When the display 101 is a touch panel, the display 101 also serves as a function of the input device 102, which is true in the present embodiment.

FIG. 3 illustrates a hardware configuration of the user terminal 100.

The hardware includes a CPU (central processing unit) 111, a ROM (read only memory) 112, a RAM (random access memory) 113, and an interface 114, and these are connected with each other through a bus 116.

The CPU 111 is an arithmetic device configured to perform calculation. The CPU 111 executes processing to be described later by, for example, executing a computer program recorded in the ROM 112. The computer program herein at least includes a computer program for causing the user terminal 100 to function as a user terminal. The computer program may be pre-installed on the user terminal 100 or may be installed later. The installation of the computer program onto the user terminal 100 may be performed through a predetermined recording medium such as a memory card, or may be performed through a network such as a LAN or the Internet.

The ROM 112 records computer programs and data necessary for the CPU 111 to execute the processing to be described later. Computer programs recorded in the ROM 112 are not limited thereto, and when the user terminal 100 is a smartphone, computer programs and data for executing, for example, a call and an electronic mail, which are necessary for causing the user terminal to function as a smartphone are recorded. The user terminal 100 can browse a home page based on data received through the network 400, and includes a well-known web browser for enabling the same.

The RAM 113 provides a work space necessary for the CPU 111 to perform processing.

The interface 114 performs data communication between each of the CPU 111, the RAM 113, and the like connected through the bus 116 and the outside. The interface 114 is connected with the display 101 and the input device 102 described above. An operation content input from the input device 102 is input to the bus 116 through the interface 114, and image data to be described later is output to the display 101 through the interface 114. The interface 114 is also connected with a GPS mechanism and a transmission-reception unit, any of which is not illustrated.

The GPS mechanism detects a position at which the user terminal 100 exists on the Earth. The GPS mechanism generates position information specifying the detected position of the user terminal 100. The GPS mechanism is publicly known or already known, and detects the position of the user terminal 100 by, for example, receiving radio wave from geostationary satellites. The position information is received by the interface 114.

The transmission-reception unit performs data transmission and reception through the network 400 as the Internet. The transmission and reception is performed in a wired manner in some cases, but when the user terminal 100 is a smartphone, the transmission and reception is performed in a wireless manner. The transmission-reception unit may have a publicly known or already known configuration with which the transmission and reception is possible. Data to be received from the network 400 by the transmission-reception unit is received through the interface 114, and the data passed from the interface 114 to the transmission-reception unit is transferred to the outside, for example, the settlement device 200 through the network 400 by the transmission-reception unit.

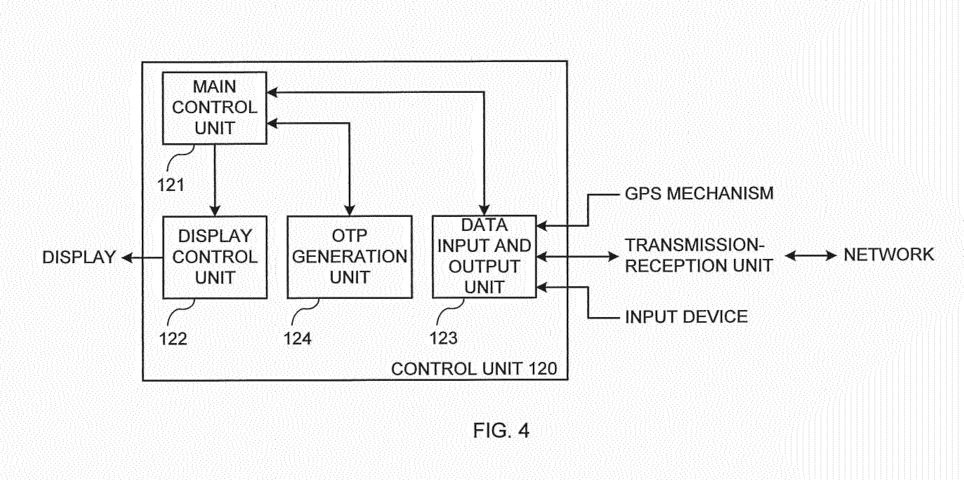

When the CPU 111 executes a computer program, each functional block as illustrated in FIG. 4 is generated inside the user terminal 100. The functional block described below may be generated by the function of the above-described computer program alone for causing the user terminal 100 to function as a user terminal that executes processing described below, but may be generated through cooperation of the above-described computer program with an OS and other computer programs installed on the user terminal 100.

A control unit 120 as described below is generated in the user terminal 100, and a main control unit 121, a display control unit 122, a data input and output unit 123, and an OTP generation unit 124 are generated in the control unit 120.

The control unit 120 executes information processing as described below.

The main control unit 121 performs overall control inside the control unit 120. For example, the main control unit 121 performs control of the display control unit 122 based on data received from the data input and output unit 123 to be described later in detail.

When having received provisional permission information to be described later from the data input and output unit 123 to be described later, the main control unit 121 notifies the OTP generation unit 124 of the reception. The main control unit 121 also receives a user ID, and a password, and money amount information to be described later from the data input and output unit 123. The main control unit 121 also receives user terminal cancellation information to be described later from the data input and output unit 123 in some cases. The main control unit 121 includes a built-in recording means such as a memory (not illustrated), and records terminal information therein. When the user terminal 100 is a smartphone, examples of the terminal information include an ID number recorded in a SIM card (subscriber identity module card) incorporated in the smartphone, and an individual identification number such as the manufacturing number of the smartphone. The main control unit 121 acquires at least one of pieces of the terminal information from the user terminal 100 in advance. The main control unit 121 may acquire the terminal information from the user terminal 100 each time the user performs payment processing. In any case, the main control unit 121 transfers the user ID, the password, the money amount information, and the terminal information to the data input and output unit 123 at a timing to be described later.

The main control unit 121 also receives a one-time password from the OTP generation unit 124.

The display control unit 122 is controlled by the main control unit 121 to perform control of an image displayed on the display 101. The display 101 displays an image based on data transferred from the display control unit 122. The main control unit 121 transfers an instruction specifying which image to be displayed on the display 101 to the display control unit 122.

The data input and output unit 123 performs data input and output to and from the control unit 120. Specifically, the data input and output unit 123 receives input from the input device 102. Examples of the input from the input device 102 to the data input and output unit 123 include an instruction to start settlement, the user ID, the password, the money amount information, an instruction to transmit the user ID, the password, and the money amount information, and the user terminal cancellation information. These are transferred to the main control unit 121.

The data input and output unit 123 also receives, from the transmission-reception unit, the provisional permission information transferred from the settlement device 200 through the network 400 to be described later. The data input and output unit 123 transfers the received provisional permission information to the main control unit 121.

The data input and output unit 123 also receives the position information from the GPS mechanism. The data input and output unit 123 transfers the received position information to the main control unit 121.

The data input and output unit 123 also receives the user ID, the password, the terminal information, and the money amount information from the main control unit 121. The user ID is information unique to each user for specifying the user, and is, although not limited to, a series of a predetermined number of characters of alphabets and numbers as described later in the present embodiment. The password is information for more reliable authentication of the user, and is, although not limited to, a series of a predetermined number of characters of alphabets and numbers as described later in the present embodiment. The terminal information is information used to specify the user terminal 100 for more reliable authentication of the user. The terminal information in the present embodiment is, although not limited to, a series of a predetermined number of characters of numbers as described later. The money amount information is information used to specify a money amount that the user pays to the administrator of the settlement terminal 300, and is a number indicating a money amount in a predetermined currency (for example, yen, dollar, or euro). The position information and the one-time password are transferred from the main control unit 121 to the data input and output unit 123. The position information may not be returned from the data input and output unit 123 to the data input and output unit 123 through the main control unit 121, but may be held at the data input and output unit 123 in a state after inputting to the data input and output unit 123 from the GPS mechanism. The one-time password may be directly transferred from the OTP generation unit 124 to the data input and output unit 123, not through the main control unit 121. The user terminal cancellation information is information indicating intention of the user for canceling one past settlement already ended as described later, and is input by the user by using the input device 102. The user terminal cancellation information at least includes information specifying one past settlement that the user desires to cancel.

The user ID, the password, the terminal information, the money amount information, the position information, the one-time password, the user terminal cancellation information, and the like are each transferred from the data input and output unit 123 to the transmission-reception unit at an appropriate timing to be described later, and all except for the one-time password are transferred from the transmission-reception unit to the settlement device 200 through the network 400.

As described above, when the main control unit 121 has received the provisional permission information, the OTP generation unit 124 is notified of the reception by the main control unit 121. When having received the notification, the OTP generation unit 124 generates a one-time password. The one-time password may be generated by a scheme of the conventional technology. A specific example of the generation scheme of the one-time password will be described later.

The one-time password is made of a number, a character, a symbol, or a series thereof, and is exemplary monetary information in the present application invention.

The following describes the settlement device 200.

The settlement device 200 is a general computer. The hardware configuration thereof may be equivalent to that of a settlement device in the conventional settlement system.

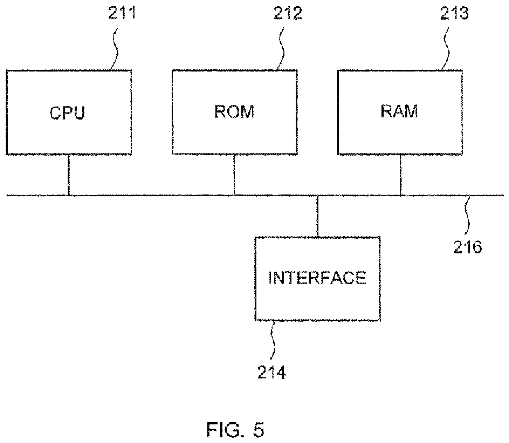

FIG. 5 illustrates an exemplary hardware configuration of the settlement device 200.

The hardware includes a CPU 211, a ROM 212, a RAM 213, and an interface 214, and these are connected with each other through a bus 216.

The CPU 211 is an arithmetic device configured to perform calculation. The CPU 211 executes processing to be described later by, for example, executing a computer program recorded in the ROM 212. The computer program herein at least includes a computer program for causing the settlement device 200 to function as a settlement device that executes the processing described below. The computer program may be pre-installed on the settlement device 200, or may be installed after shipping. The installation of the computer program onto the settlement device 200 may be performed through a predetermined recording medium such as a memory card, or may be performed through a network such as a LAN or the Internet.

The ROM 212 records computer programs and data necessary for the CPU 211 to execute the processing to be described later. Computer programs recorded in the ROM 212 are not limited thereto, but other necessary computer programs may be recorded.

The RAM 213 provides a work space necessary for the CPU 211 to perform processing.

Another recording medium such as a HDD (hard disk drive) or an SSD (solid state drive) may, of course, be provided in addition to the ROM 212 and the RAM 213 to achieve part of the functions of the ROM 212 and the RAM 213.

The interface 214 performs data communication between each of the CPU 211, the RAM 213, and the like connected through the bus 216 and the outside. The interface 214 is at least connected with the transmission-reception unit. Data to be received from the network 400 by the transmission-reception unit is received through the interface 214, and the data passed from the interface 214 to the transmission-reception unit is transferred to the outside, for example, the user terminal 100 through the network 400 by the transmission-reception unit.

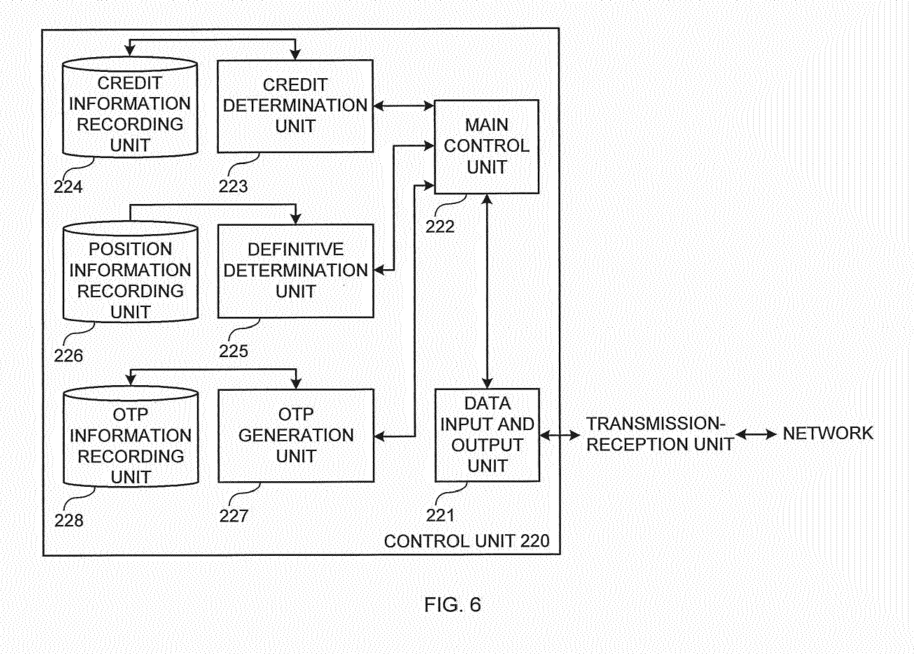

When the CPU 211 executes a computer program, each functional block as illustrated in FIG. 6 is generated inside the settlement device 200. The functional block described below may be generated by the function of the above-described computer program alone for causing the settlement device 200 to function as a settlement device that executes the processing described below, but may be generated through cooperation of the above-described computer program with an OS and other computer programs installed on the settlement device 200.

A control unit 220 as described below is generated in the settlement device 200. A data input and output unit 221, a main control unit 222, a credit determination unit 223, a credit information recording unit 224, a definitive determination unit 225, a position information recording unit 226, an OTP generation unit 227, and an OTP information recording unit 228 are generated in the control unit 220.

The data input and output unit 221 performs data input and output to and from the control unit 220. Specifically, the data input and output unit 221 receives various kinds of data to be described later from the main control unit 222. The data input and output unit 221 passes the various kinds of data received from the main control unit 222 to the transmission-reception unit, and the transmission-reception unit transfers the same data to the user terminal 100 or the settlement terminal 300 through the network 400.

The data input and output unit 221 also receives, from the transmission-reception unit, the various kinds of data to be described later received from the user terminal 100 or the settlement terminal 300 through the network 400 by the transmission-reception unit, and transfers the received data to the main control unit 222.

The main control unit 222 performs overall control inside the control unit 220.

The main control unit 222 receives the user ID, the password, the terminal information, and the money amount information from the data input and output unit 221 in some cases. When having received the same, the main control unit 222 transfers the same to the credit determination unit 223.

The main control unit 222 receives, from the data input and output unit 221, the position information transferred from the user terminal 100 in some cases. When having received the position information, the main control unit 222 transfers the same to the definitive determination unit 225.

The main control unit 222 also receives provisional permission information to be described later from the credit determination unit 223 in some cases. When having received the same, the main control unit 222 transfers the same to the data input and output unit 221. The main control unit 222 also receives, from the data input and output unit 221, settlement application information, the one-time password, and the user ID that are transferred from the settlement terminal 300 and to be described later in some cases. When having received the same, the main control unit 222 transfers the same to the definitive determination unit 225, and transfers an instruction to generate the one-time password to the OTP generation unit 227.

The main control unit 222 also receives the one-time password from the OTP generation unit 227 in some cases. When having received the same, the main control unit 222 transfers the same to the definitive determination unit 225. The one-time password does not necessarily need to be transferred to the definitive determination unit 225 through the main control unit 222 but may be, for example, directly transferred from the OTP generation unit 227 to the definitive determination unit 225.

The main control unit 222 also receives definitive determination data to be described later from the definitive determination unit 225 in some cases. When having received the same, the main control unit 222 performs settlement processing. The settlement processing is processing for authorizing settlement from a user to the administrator of the settlement terminal 300 having transmitted the provisional permission information for calculating payment to the user. The main control unit 222 holds data of which settlement has been performed. For example, the main control unit 222 records, in a recording medium (not illustrated) for each user, information that how much payment from who to who is finally permitted. As part of the settlement processing, the main control unit 222 rewrites contents in the credit information recording unit 224, which will be described later.

The main control unit 222 receives the user terminal cancellation information and a settlement terminal cancellation information to be described later from the data input and output unit 221 in some cases. When the main control unit 222 has received the same and past settlements specified by the user terminal cancellation information and the settlement terminal cancellation information are identical to each other, the main control unit 222 performs processing for canceling the past settlements. However, the settlement cancellation processing is not necessarily essential, and when the settlement cancellation processing is unnecessary, only functions necessary for the processing may be deleted from the user terminal 100, the settlement device 200, and the settlement terminal 300. In the present embodiment, only when the main control unit 222 has received both of the user terminal cancellation information and the settlement terminal cancellation information to be described later and past settlements specified by the user terminal cancellation information and the settlement terminal cancellation information are identical to each other, the past settlements are canceled, but instead, when having received any one of the user terminal cancellation information and the settlement terminal cancellation information, the main control unit 222 may cancel a past settlement specified by the user terminal cancellation information or the settlement terminal cancellation information. The main control unit 222 may cancel only a relatively new settlement among past settlements. For example, the main control unit 222 may allow cancellation of a settlement within 10 minutes after the above-described settlement processing ends.

As described above, the credit determination unit 223 receives the user ID, the password, and the terminal information from the main control unit 222. When having received the same, the credit determination unit 223 performs credit determination. The credit determination is determination of whether it is possible to perform settlement of payment of a money amount specified by the above-described money amount information for a user specified by the user ID, the password, and the terminal information. The credit determination includes what is called authentication processing of whether the user is valid.

The credit determination unit 223 uses data recorded in the credit information recording unit 224 for the credit determination including the authentication processing.

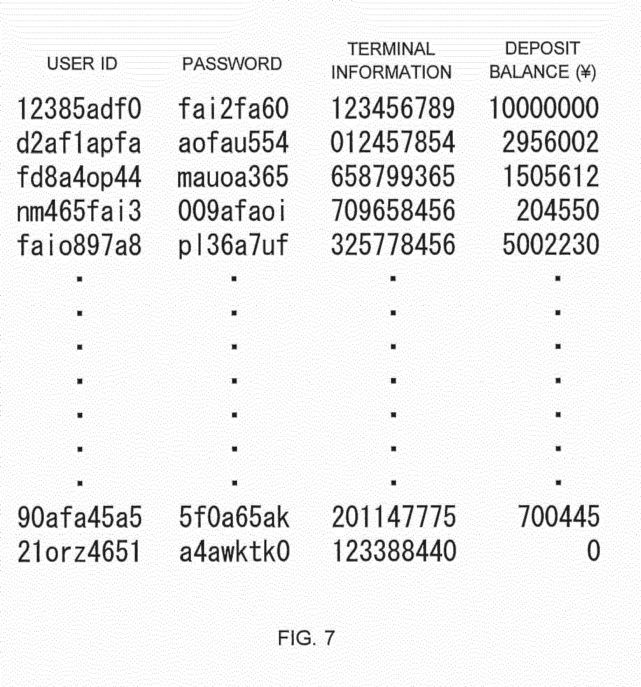

Data as illustrated in FIG. 7 is recorded in the credit information recording unit 224.

The data recorded in the credit information recording unit 224 in the present embodiment is, although not limited to, a user ID, a password, terminal information, and a deposit balance. These are associated for each user. In addition to them, a real name, a phone number, an electronic mail address, and the like of each user may, of course, be recorded.

The user ID is information used to specify each user. The user ID in the present embodiment is, although not limited to, a series of a predetermined number of characters of alphabets and numbers. The user ID is determined by the user or the administrator of the settlement device 200. When the user ID is determined by the user, the user ID is notified from the user to the administrator of the settlement device 200 by a publicly known or already known method, and recorded in the credit information recording unit 224.

The password is information for checking the validity of each user. The password in the present embodiment is, although not limited to, a series of a predetermined number of characters of alphabets and numbers. The password is determined by the user. The password is notified from the user to the administrator of the settlement device 200 by a publicly known or already known method, and recorded in the credit information recording unit 224.

The terminal information is information for further solidly checking the validity of each user. As described above, specific examples thereof are an ID number recorded in a SIM card, the manufacturing number of a smartphone, and the like. The terminal information is uniquely determined for each user terminal 100. The terminal information is notified, for example, from the user to the administrator of the settlement device 200 by a publicly known or already known method, and the notified terminal information is recorded in the credit information recording unit 224.

The deposit balance is the amount of deposit of each user, and indicates the money amount in an account of the user. The deposit balance is recorded as deposit balance information specifying the same in the credit information recording unit 224. The deposit balance is the money amount in the account of the user managed by the administrator of the settlement device 200 when the user has already paid some money to the administrator of the settlement device 200 in some cases. In such a case, the settlement system is a settlement system in what is called a pay-as-you-go scheme. Alternatively, when the administrator of the settlement device 200 is a bank or the like that performs deposit management as a business or when the administrator of the settlement device 200 cooperates with a bank or the like, the deposit balance is the money amount in the account of the user at the bank in some cases. In the present embodiment, any case is possible.

When having received the user ID, the password, the terminal information, and the money amount information from the main control unit 222, the credit determination unit 223 reads, from the credit information recording unit 224, a password, terminal information, and a deposit balance associated with a user ID same as the received user ID. When no user ID same as the user ID received by the credit determination unit 223 exists in the credit information recording unit 224, the credit determination unit 223 does not read information such as a password from the credit information recording unit 224. In this case, the credit determination unit 223 stops the credit determination processing.

When a user ID same as the user ID received from the main control unit 222 by the credit determination unit 223 is recorded in the credit information recording unit 224, and a password, terminal information, and deposit balance associated with the user ID same as the received user ID are read from the credit information recording unit 224, the credit determination unit 223 determines whether the password and the terminal information received from the main control unit 222 are same as the password and the terminal information read from the credit information recording unit 224. When matching is made between the passwords and between the pieces of terminal information, the credit determination unit 223 authenticates that the user having send the user ID and the like is a valid user, or when matching is not made between the passwords or between the pieces of terminal information, the credit determination unit 223 determines that the user having sent the user ID and the like is not a valid user, and stops the credit determination processing. The processing so far is the authentication processing. Thus, all of the user ID, the password, and the terminal information sent by the user need to completely match those recorded in the credit information recording unit 224 to authenticate that the user is valid in the authentication processing in the credit determination in the present embodiment. When it is authenticated through the authentication processing that the user having send the password is a valid user, the credit determination unit 223 performs credit determination of whether to allow settlement asked by the user.

The credit determination is performed by comparing the money amount information transmitted from the user terminal 100 with the deposit balance read from the above-described credit information recording unit 224 and associated with the user ID associated with the money amount information. Although not limited thereto, in the present embodiment, the settlement asked by the user is allowed when the deposit balance is equal to or larger than the money amount specified by the money amount information. In this case, the credit determination unit 223 generates the provisional permission information. When the deposit balance is smaller than the money amount specified by the money amount information, the settlement asked by the user is not allowed. In this case, the credit determination unit 223 does not generate the provisional permission information. When the provisional permission information has been generated by the credit determination unit 223, the provisional permission information is transferred to the main control unit 222.

The credit determination unit 223 has a function of specifying a time (a clock function of a normal computer may be used), and notifies the main control unit 222 of time information for specifying a time at which the credit determination is performed. The time information is transferred from the main control unit 222 to the definitive determination unit 225.

As described above, the definitive determination unit 225 receives, from the main control unit 222, the position information transferred from the user terminal 100 in some cases. The main control unit 222 also receives, from the data input and output unit 221, the settlement application information, the user ID, and the one-time password that are transferred from the settlement terminal 300 in some cases. Although not limited thereto, in the present embodiment, the settlement application information, the user ID, and the one-time password are collectively transferred from the settlement terminal 300 to the settlement device 200, and the three pieces of information are collectively received by the definitive determination unit 225. The definitive determination unit 225 has a function of performing definitive determination processing when having received the settlement application information, the user ID, and the one-time password. The definitive determination is determination of whether to finally allow the payment to the administrator of the settlement terminal 300, which is asked by the user.

The definitive determination unit 225 performs the definitive determination by using information recorded in the position information recording unit 226. In addition, the definitive determination uses the one-time password provided from the OTP generation unit 227 through the main control unit 222.

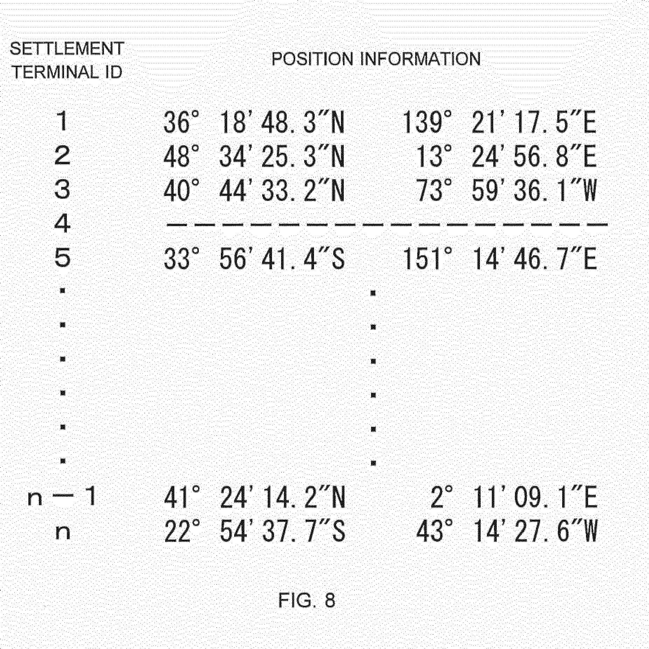

As illustrated in FIG. 8, a settlement terminal ID and the position information are recorded in association with each other in the position information recording unit 226.

The settlement terminal ID is used to distinguish and specify each settlement terminal 300. The number of settlement terminals 300 in the present embodiment is n, and thus, although not limited thereto, in the present embodiment, a natural number of 1 to n in sequence is used as the settlement terminal ID for specifying each settlement terminal 300.

The position information is information used to specify a position at which the settlement terminal 300 associated with the position information exists. The position information in the present embodiment specifies the position of the settlement terminal 300 with a latitude and a longitude. In FIG. 8, numbers denoted by "N" and "S" on the left side specify a north latitude and a south latitude, respectively, and numbers denoted by "E" and "W" on the right side specify an east longitude and a west longitude, respectively. However, the format of the position information is not limited to the combination of a latitude and a longitude. The position information generated by the GPS mechanism of the user terminal 100 has the same format in the present embodiment.

In FIG. 8, no position information is set for the settlement terminal ID of "4". For example, when the settlement terminal 300 is used for settlement at a virtual shop on the Internet, specification of the position of the settlement terminal 300 is not much meaningful because of a reason to be described later. Setting of the position information is not performed for such a settlement terminal 300 in some cases.

The position information can be informed to the administrator of the settlement device 200, for example, through notification from the administrator of the settlement terminal 300 to the administrator of the settlement device 200 by appropriate means such as an electronic mail or a letter at installation of the settlement terminal 300. The administrator of the settlement device 200 may record the notified position information in the position information recording unit 226 in association with the settlement terminal ID of the settlement terminal 300.

The above-described settlement application information is provided with the settlement terminal ID of the settlement terminal 300 having transmitted the settlement application information. When having received the settlement application information and the one-time password, the definitive determination unit 225 reads, from the position information recording unit 226, position information associated with a settlement terminal ID matching the settlement terminal ID provided to the settlement application information.

The OTP generation unit 227 has a function of generating a one-time password.

As described above, when having received the settlement application information and the one-time password from the data input and output unit 221, the main control unit 222 transfers an instruction to generate a one-time password to the OTP generation unit 227. When having received the instruction, the OTP generation unit 227 generates a one-time password. In the present embodiment, the one-time password is generated at the settlement device 200 after the settlement device 200 has received the settlement application information and the one-time password generated by the user terminal 100, but the present invention is not limited thereto. For example, the settlement device 200 may cause the OTP generation unit 227 to generate a one-time password at an appropriate timing at or after generation of the provisional permission information and before the definitive determination unit 225 performs the definitive determination.

The one-time password may be generated by a scheme of the conventional technology, and a specific example thereof is as follows, for example.

To generate the one-time password, a method of sequentially generating, by using an initial value (or two or more initial values), a new value by substituting a past value into a predetermined function may be executed each time the one-time password is needed. In this manner, the one-time password as the above-described "value" can be continuously generated. Such a one-time password is a pseudo random number having initial value dependency.

Exemplary functions used to generate the above-described "value" are functions (a) to (c) described below. The functions (a) to (c) described below are functions for generating $X_N$ as the N-th "value". In the functions, P, Q, R, and S are natural numbers.

$$(a) \quad (X_N) = (X_{N-1})^P + (X_{N-2})^Q$$

$$(b) \quad (X_N) = (X_{N-1})^P$$

$$(c) \quad (X_N) = (X_{N-1})^P (X_{N-2})^Q (X_{N-3})^R (X_{N-4})^S$$

The function (a) uses two past "values" and generates a new "value" by adding the two past "values" raised to the power of P and the power of Q, respectively. Precisely, when two past "values" are used and the two past "values" raised to the power of P and the power of Q are added, the number of digits increases, and thus in reality, a new "value" is generated by, for example, extracting an appropriate number of digits from the head of the calculated value, extracting an appropriate number of digits from the end thereof, or extracting an appropriate number of digits from an appropriate part of the value.

The function (b) uses one past "value" and generates a new "value" by sorting as described above the number of digits of the past value raised to the power of P.

The function (c) uses four past "values" and generates a new "value" by calculating the product of the four past "values" raised to the power of P, the power of Q, the power of R, and the power of S, respectively, and thereafter sorting the number of digits as described above.

The above-described functions (a) to (c) are exemplary algorithms for generating the one-time password, and when the one-time password is generated, the algorithms may be changed, for example, the above-described functions (a) to (c) may be sequentially used.

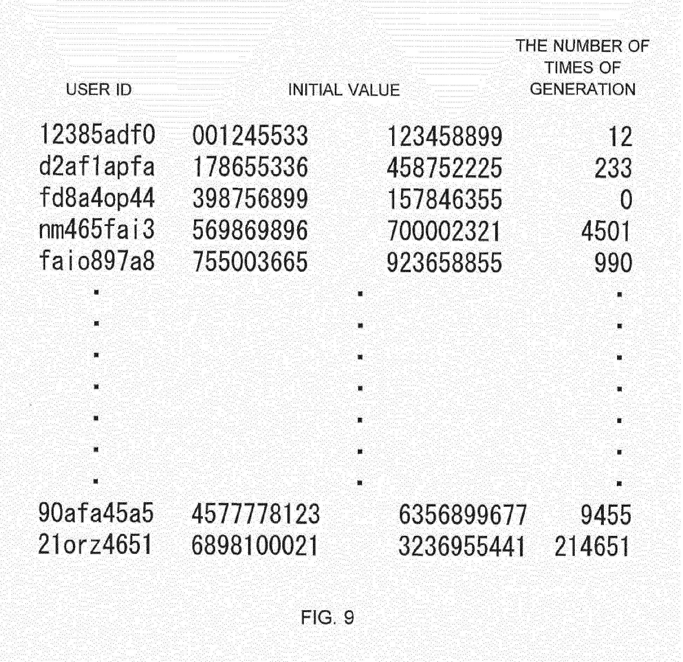

The OTP generation unit 227 uses data recorded in the OTP information recording unit 228 to generate the one-time password. For example, data as written in FIG. 9 is recorded in the OTP information recording unit 228. The data recorded in the OTP information recording unit 228 includes a user ID, an initial value, and the number of times of generation. In the data, only the initial value is essential.

The user ID recorded in the OTP information recording unit 228 is same as the user ID recorded in the credit information recording unit 224, and used to specify each user.

The initial value is an initial value used to generate a one-time password.

The initial value is different between the user terminals 100. An initial value same as the initial value provided to each user terminal 100 is recorded in the OTP information recording unit 228 so that the OTP generation unit 227 of the settlement device 200 can generate a one-time password same as the one-time password generated by the OTP generation unit 124 of each user terminal 100. As described above, the one-time password is a pseudo random number having initial value dependency. In other words, one-time passwords for a user terminal 100 at the same order always match each other by comparison. Thus, when a one-time password same as the initial value held by each user terminal 100 is prepared at the settlement device 200 in advance, the settlement device 200 can reproduce the one-time password for any user terminal 100. In the present embodiment, two initial values are recorded in the OTP information recording unit 228 for each user terminal 100. This is because, although not limited thereto, a one-time password is generated by using the above-described function (a) that generates a new "value" using two past "values" in the present embodiment. It suffices to record, in the OTP information recording unit 228, a necessary number of past values, in other words, one-time passwords for generating a new "value".

The number of times of generation is a numerical value indicating how many times the one-time password for the user terminal 100 is generated. As described above, the one-time password is a random number but is a pseudo random number. The first one-time password generated by using an initial value is used for the definitive determination to be described later when the number of times of generation is zero, the second one-time password generated by using the initial value is used for the definitive determination when the number of times of generation is one, and the (N-1)-th one-time password generated by using the above-described initial value is used for the definitive determination when the number of times of generation is N.

When having received an instruction to generate a one-time password from the main control unit 222, the OTP generation unit 227 reads, from the OTP information recording unit 228, an initial value and the number of times of generation that are associated with a user ID received together with the one-time password. The OTP generation unit 227 substitutes the initial value into the above-described function (a) and generates values up to the (N-1)-th value when the read number of times of generation is N. The value is a one-time password used for the definitive determination.

A one-time password is generated at the OTP generation unit 124 of the user terminal 100 by the same method. As described above, the OTP generation unit 124 of the user terminal 100 has an initial value same as that recorded in the OTP information recording unit 228 of the settlement device 200, and can use a function (in the present embodiment, the function (a)) same as that used by the OTP generation unit 227 of the settlement device 200, and record the number of times of generation that specifies how many times "values" are generated in the past like a number recorded in the OTP information recording unit 228. Thus, the one-time passwords generated by the user terminal 100 and the settlement device 200 can be constantly in synchronization with each other.

In this manner, a method of generating the same one-time password at two devices that generate one-time passwords or using one-time passwords generated in the same order at two devices to synchronize the one-time passwords is typically referred to as event synchronization. The above-described method employs a one-time password method using the event synchronization. Alternatively, time information may be used for the one-time password synchronization. Such a one-time password synchronization method is typically referred to as time synchronization. The event synchronization and the time synchronization are well-known technologies, and any of them can be used to synchronize one-time passwords.

In any case, the OTP generation unit 227 transfers the generated one-time password to the definitive determination unit 225 through the main control unit 222. In addition, the OTP generation unit 227 rewrites to increment, by one, the number of times of generation associated with the user ID of the user terminal 100 that is recorded in the OTP information recording unit 228 and for which the one-time password for the user terminal 100 is produced.

As described above, only an initial value is essential among information to be recorded in the OTP information recording unit 228. In this case, the one-time password generated by the user terminal 100 and the one-time password generated by the settlement device 200 are synchronized with each other as described below.

First, description is made on a case in which there is no information of the number of times of generation. In this case, the OTP generation unit 227 of the settlement device 200 repeats processing of deleting an older "value" and overwriting the same with a new "value" each time the new "value" is generated. The same processing is repeated at the user terminal 100, thereby synchronizing the one-time password generated by the user terminal 100 and the one-time password generated by the settlement device 200 with each other without using information of the number of times of generation indicating how many times "values" are generated in the past.

Subsequently, description is made on a case in which there is no user ID. When no user ID exists, a user is specified with information used to specify the user in place of a user ID. The information used to specify the user is needed in principle to determine under which of conditions different for individual users a one-time password is to be generated at the settlement device 200 because a condition for the settlement device 200 to generate a one-time password is different between users (for example, initial values allocated to individual users are different from each other in the present embodiment, but a function or algorithm to be used may be changed between the users). For example, a user may provide, in place of the user ID, a signature on a touch panel display included in the settlement terminal 300 to be described later, and the sign may be transmitted as electronic data from the settlement terminal 300 to the settlement device 200. Alternatively, the settlement terminal 300 may be provided with a reading device configured to acquire living body information such as a fingerprint or a vein characteristic of the user, and for example, the fingerprint or the vein characteristic read by the reading device may be transmitted as electronic data to the settlement device 200. In such a case, the signature, the fingerprint, the vein characteristic, or the like is recorded in the OTP information recording unit 228 in place of or in addition to the user ID.

As described above, the definitive determination unit 225 receives the settlement application information and the one-time password from the main control unit 222. Before this, the definitive determination unit 225 receives, from the main control unit 222, the position information transferred from the user terminal 100 and the time information generated by the credit determination unit 223.

The definitive determination unit 225 receives, from the position information recording unit 226, the position information indicating the position of the settlement terminal 300 having sent the settlement application information to the settlement device 200, and receives the one-time password from the OTP generation unit 227.

The definitive determination unit 225 compares the one-time password from the settlement terminal 300, which is received through the main control unit 222, and the one-time password from the OTP generation unit 227, which is received through the main control unit 222, and compares the position information indicating the position of the user terminal 100 and received through the main control unit 222 and the position information received from the position information recording unit 226. As a result, only when three conditions that the two one-time passwords thus compared match each other, positions specified by the two pieces of the position information thus compared are separated from each other within a predetermined distance, for example, 20 m, and a time at which the comparison is performed is within a predetermined time, for example, five minutes, 30 minutes, five hours, several days, or several months from a time specified by the time information received from the credit determination unit 223 through the main control unit 222 are all satisfied, the definitive determination unit 225 finally performs determination to allow payment from the user of the user terminal 100 to the administrator of the settlement terminal 300. When any of the three conditions is not satisfied, the definitive determination unit 225 finally performs determination not to allow the payment. These determinations are referred to as the definitive determination.

When having performed the definitive determination, the definitive determination unit 225 transfers the definitive determination data as data indicating a result of the definitive determination to the main control unit 222. When payment is allowed by the definitive determination, the main control unit 222 having received the same performs processing to allow payment of money in an money amount specified by the money amount information having triggered one-time password generation from the user of the user terminal 100 having generated the one-time password used to perform the definitive determination to the administrator of the settlement terminal 300 having send the one-time password used to perform the definitive determination. A result of the processing is recorded in, for example, a recording medium (not illustrated) built in the main control unit 222, and is notified to a related financial organization or the like when needed to process the payment. When the payment is not allowed by the definitive determination, the main control unit 222 does not perform the above-described processing. The main control unit 222 transfers a content based on the definitive determination data to the data input and output unit 221, and transfers the content, through the transmission-reception unit and the network 400, to the settlement terminal 300 having transmitted the settlement application information on which the definitive determination is based.

The following describes the settlement terminal 300.

The settlement terminal 300 is substantially same as a settlement terminal used in a settlement system using a credit card, and is a typical computer. The hardware configuration thereof may be equivalent to that of a settlement terminal in the conventional settlement system, and is equivalent to that of the user terminal 100 in the present embodiment.

The settlement terminal 300 includes a touch panel display (not illustrated). Thus, the settlement terminal 300 includes a display and an input device. Instead, the settlement terminal 300 may include a non-touch panel display, and an input device selected from among publicly known or already known input devices such as a numeric keypad, a keyboard, a mouse, and a trackball as needed where the display and the input device are separately provided, but in the following description, the settlement system in the present embodiment includes a touch panel keyboard.

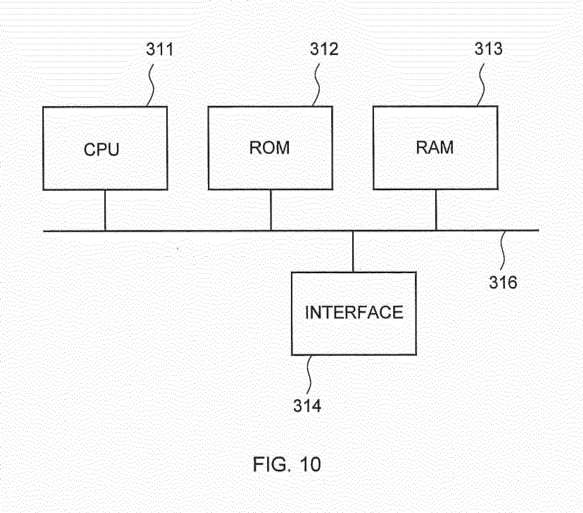

FIG. 10 illustrates the hardware configuration of the settlement terminal 300.

The hardware includes a CPU 311, a ROM 312, a RAM 313, and an interface 314, and these are connected with each other through a bus 316.

The CPU 311 is an arithmetic device configured to perform calculation. The CPU 311 executes processing to be described later by, for example, executing a computer program recorded in the ROM 312. The computer program may be pre-installed on the settlement terminal 300 or may be installed after shipping. The installation of the computer program onto the settlement terminal 300 may be performed through a predetermined recording medium such as a memory card, or may be performed through a network such as a LAN or the Internet.

The ROM 312 records computer programs and data necessary for the CPU 311 to execute the processing to be described later. Computer programs recorded in the ROM 312 are not limited thereto, but other necessary computer programs may be recorded.

The RAM 313 provides a work space necessary for the CPU 311 to perform processing.

The interface 314 performs data communication between each of the CPU 311, the RAM 313, and the like connected through the bus 316 and the outside. The interface 314 is at least connected with a transmission-reception unit (not illustrated). Data to be received from the network 400 by the transmission-reception unit is received through the interface 314, and the data passed from the interface 314 to the transmission-reception unit is transferred to the outside, for example, the settlement device 200 through the network 400 by the transmission-reception unit.

The interface 314 is also connected with the input device provided to a touch panel display, and receives inputting from the input device. The interface 314 is connected with the touch panel display, and transfers data for displaying an image to be described later on the touch panel display.

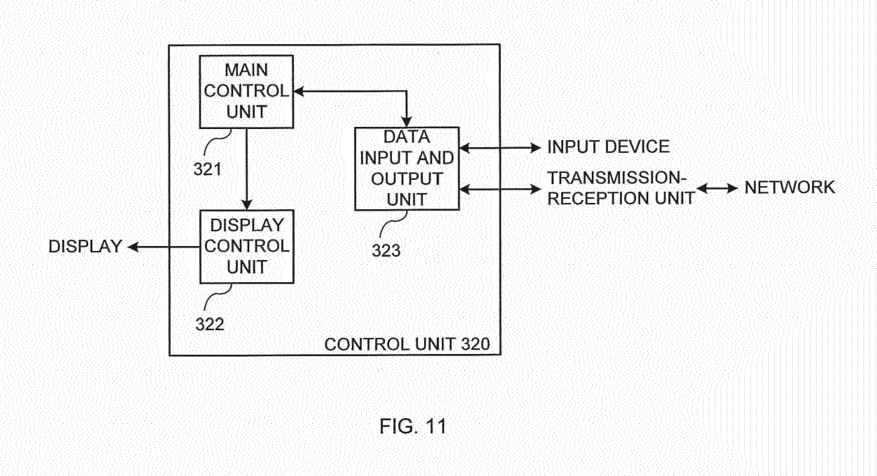

When the CPU 311 executes a computer program, each functional block as illustrated in FIG. 11 is generated inside the settlement terminal 300. The functional block described below may be generated by the function of the above-described computer program for causing the settlement terminal 300 to function as a settlement terminal that executes the processing described below, but may be generated through cooperation of the above-described computer program with an OS and other computer programs installed on the settlement terminal 300.

A control unit 320 as described below is generated in the settlement terminal 300, and a main control unit 321, a display control unit 322, and a data input and output unit 323 are generated in the control unit 320.

The control unit 320 executes information processing as described below.

The main control unit 321 performs overall control inside the control unit 320. For example, the main control unit 321 performs control of the display control unit 322 based on data received from the data input and output unit 323 to be described later in detail.

The main control unit 321 receives a user ID, a one-time password generated by the user terminal 100, and settlement application information from the data input and output unit 323 to be described later. When having received all of them, the main control unit 321 transfers the same to the data input and output unit 323. The main control unit 321 receives the settlement terminal cancellation information to be described later from the data input and output unit 323 in some cases. When having received the settlement terminal cancellation information, the main control unit 321 transfers the same to the data input and output unit 323 at an appropriate timing. The main control unit 321 holds a settlement terminal ID unique to each settlement terminal 300 for distinguishing the settlement terminals 300. The settlement terminal ID is included in the settlement application information by the main control unit 321.

The display control unit 322 is controlled by the main control unit 321 to perform control of an image displayed on the touch panel display. The display displays an image based on data transferred from the display control unit 322. The main control unit 321 transfers an instruction specifying which image to be displayed on the display to the display control unit 322.

The data input and output unit 323 performs data input and output to and from the control unit 320. Specifically, the data input and output unit 323 receives inputting from the input device. As described above, exemplary data input from the input device to the data input and output unit 323 includes the user ID, the one-time password, the settlement application information. The data is transferred to the main control unit 321. The settlement terminal cancellation information is input from the input device in some cases.

The data input and output unit 323 outputs data to a transmission-reception unit (not illustrated). The data output to the transmission-reception unit is, for example, the user ID, the one-time password, the settlement application information, and the settlement terminal cancellation information, and the same is transferred from the transmission-reception unit to the settlement device 200 through the network 400. The user ID and the one-time password are as already described above. The settlement application information is information requesting the settlement device 200 for settlement definitive determination. The settlement terminal cancellation information is information indicating intention of the administrator of the settlement terminal 300 for canceling one past settlement having already ended, and is input by the administrator of the settlement terminal 300 by using the input device. The settlement terminal cancellation information at least includes information specifying one past settlement that the administrator desires to cancel.

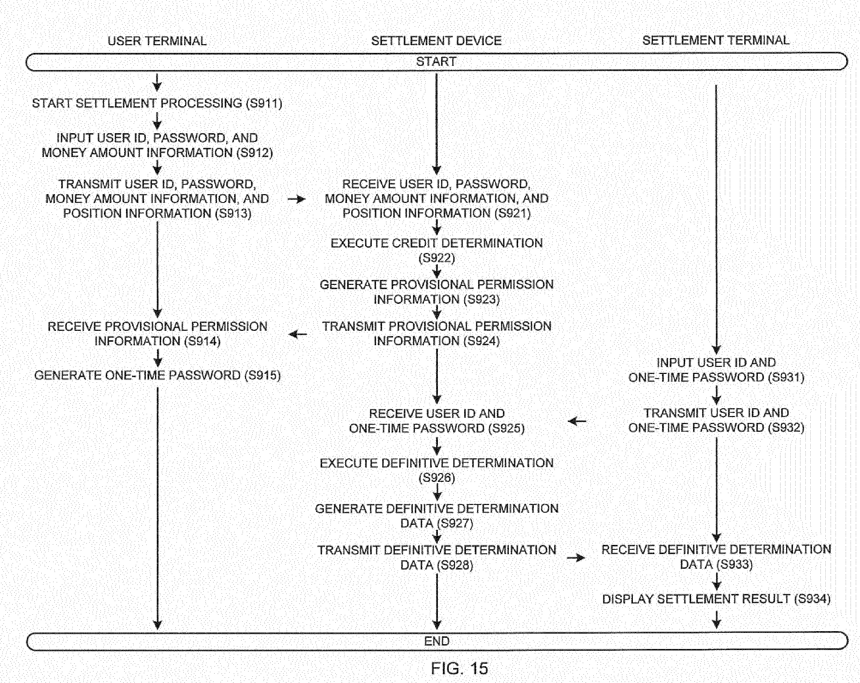

The following describes a method of using the settlement system as described above, and operation thereof with reference to FIG. 15.

When a settlement is to be performed by using such a system, first, the user operates the user terminal 100 thereof to start settlement processing (S911). For this, the user inputs information indicating start of settlement processing.

The user may input the information by, for example, touching an icon (not illustrated) displayed on the display 101 of the user terminal 100.

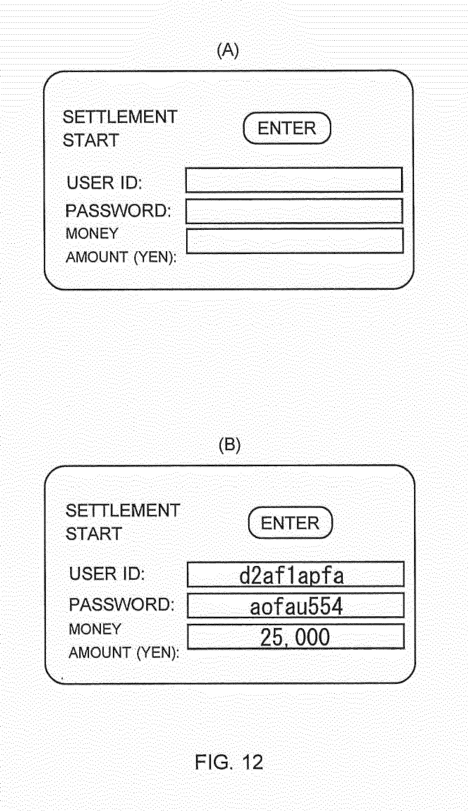

The information is transferred from the data input and output unit 123 to the main control unit 121. When having received the information, the main control unit 121 transfers, to the display control unit 122, an instruction to display, on the display 101, an image for prompting the user to input a user ID and the like. When having received the instruction, the display control unit 122 displays, on the display 101, for example, an image prompting the user to input a user ID, a password, and a money amount to be paid by the user as illustrated in FIG. 12 (A). The user inputs a user ID on the right side of a part indicated as "user ID", a password on the right side of a part indicated as "password", and a money amount to be paid by the user on the right side of a part indicated as "money amount (yen)" (S912). Data of the user ID and the password input by the user is input from the input device 102 to the data input and output unit 123, and transferred to the main control unit 121. The money amount is specified by the money amount information, and the money amount information is transferred to the main control unit 121, too. The user ID, the password, and the money amount input by the user are displayed on the display 101 through control of the display control unit 122 controlled by the main control unit 121 while the inputting is performed, and thus the user can perform the inputting of the user ID, the password, and the money amount while checking the display 101. In an example illustrated in FIG. 12 (B), the user is to pay 25000 yen by using the settlement system.

When the inputting of the user ID, the password, and the money amount information ends, the user clicks a button denoted by "Enter" and displayed on the display 101.

When the user clicks the button denoted by "Enter", the GPS mechanism generates position information of the user terminal 100 as information specifying a position at which the user terminal 100 exists. The position information is transferred from the data input and output unit 123 to the main control unit 121. The main control unit 121 collectively transfers, to the data input and output unit 123, the position information and the terminal information recorded in the recording means (not illustrated) of the main control unit 121 in addition to the user ID, the password, and the money amount information. The data input and output unit 123 collectively transfers the data to the transmission-reception unit, and the transmission-reception unit collectively transfers the data to the settlement device 200 through the network 400 (S913). The transmission of the above-described five pieces of data to the settlement device 200 is executed substantially in real time, for example, in several seconds at least after the user clicks the button denoted by "Enter".

The settlement device 200 receives the data at the transmission-reception unit (S921). The transmission-reception unit transfers the data to the data input and output unit 221, and the data input and output unit 221 transfers the data to the main control unit 222. The main control unit 222 transfers the user ID, the password, the terminal information, and the money amount information to the credit determination unit 223, and the position information of the user terminal 100 to the definitive determination unit 225.

The credit determination unit 223 executes the credit determination (S922). Specifically, the credit determination is executed as described below.

when having received the user ID, the password, and the terminal information from the main control unit 222, the credit determination unit 223 reads a password, terminal information, and a deposit balance associated with a user ID same as the received user ID from the credit information recording unit 224. When no user ID same as the user ID received by the credit determination unit 223 exists in the credit information recording unit 224, the credit determination unit 223 does not read the information such as the password from the credit information recording unit 224. In this case, the credit determination unit 223 stops the credit determination processing.

In the present embodiment, as illustrated in FIG. 12 (B), the user ID input to the user terminal 100 by the user is "d2aflapfa", and a user ID same as the input user ID exists at the second place from the top at the credit information recording unit 224, and thus the credit determination unit 223 reads a password (aofau554), terminal information (012457854), and a deposit balance (2956002 yen) associated with the user ID from the credit information recording unit 224.

When a user ID same as the user ID received from the main control unit 222 by the credit determination unit 223 is recorded in the credit information recording unit 224, and a password, terminal information, and a deposit balance associated with the user ID same as the user ID received from the main control unit 222 are read from the credit information recording unit 224, the credit determination unit 223 determines whether the password and the terminal information received from the main control unit 222 are same as the password and the terminal information read from the credit information recording unit 224. When matching is made between the passwords and between the piece of terminal information, the credit determination unit 223 authenticates that the user having sent the user ID and the like is a valid user. When matching is not made between the passwords or between the pieces of terminal information, the credit determination unit 223 determines that the user having sent the user ID and the like is not a valid user, and stops the credit determination processing.

Then, the credit determination is executed for the authenticated user. The credit determination unit 223 compares the money amount information sent by the user with the deposit balance associated with the user ID of the user and read from the credit information recording unit 224. In the present embodiment, when the deposit balance is equal to or larger than the money amount specified by the money amount information, a settlement asked by the user is provisionally allowed. When the deposit balance is smaller than the money amount specified by the money amount information, the settlement asked by the user is not allowed. In this example, since the deposit balance (2956002 yen) is larger than the money amount (25000 yen) specified by the money amount information, the settlement asked by the user is allowed. When the settlement is allowed, the credit determination unit 223 generates the provisional permission information (S923). When the provisional permission information is generated by the credit determination unit 223, the provisional permission information is transferred to the main control unit 222.

When the provisional permission information is generated by the credit determination unit 223, the credit determination unit 223 notifies the main control unit 222 of time information for specifying a time at which the credit determination is performed. The time information is transferred together with the user ID from the main control unit 222 to the definitive determination unit 225 to specify a user for which the settlement is allowed by the provisional permission information.

The main control unit 222 transfers the provisional permission information to the data input and output unit 221. The data input and output unit 221 transmits the provisional permission information to the user terminal 100 through the transmission-reception unit and the network 400 (S924).

The transmission-reception unit of the user terminal 100 receives the provisional permission information transferred from the settlement device 200 (S914). The received provisional permission information is transferred from the data input and output unit 123 to the main control unit 121. Having received the provisional permission information, the main control unit 121 notifies the OTP generation unit 124 of the reception of the provisional permission information.

Having received the notification, the OTP generation unit 124 generates a one-time password (S915). The OTP generation unit 124 has an initial value for generating a one-time password, and records the number of times of generation indicating how many times one-time passwords are generated in the past. The OTP generation unit 124 can use a function (in other words, an algorithm) for generating a one-time password. The OTP generation unit 124 sequentially generates values by repeating processing of obtaining a next value by substituting, into the function again, a value acquired by substituting the initial value into the above-described function. The OTP generation unit 124 sets, as a one-time password to be used at this time, a value produced at an order larger than a number indicated by the number of times of generation by one.

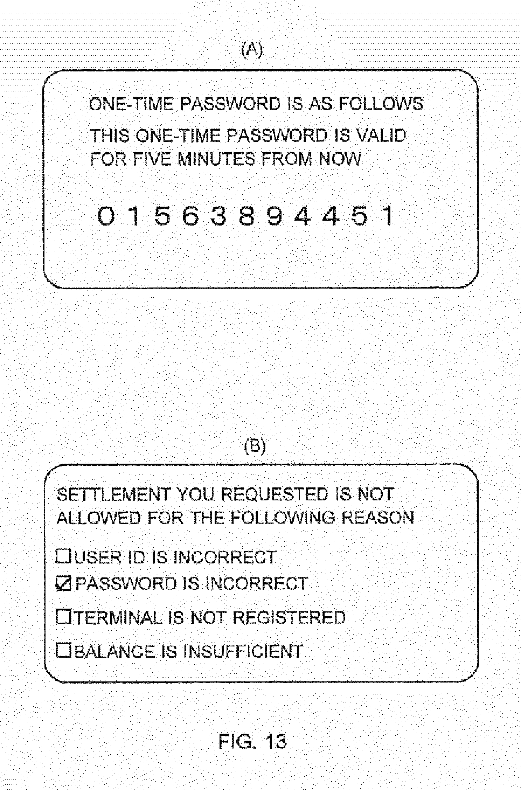

The generated one-time password is transferred to the main control unit 121. The main control unit 121 transfers an instruction to display the one-time password on the display 101 to the display control unit 122. The display control unit 122 displays, for example, an image as illustrated in FIG. 13 (A).

The one-time password is used like a credit card number in the conventional settlement system using a credit card, but a time in which the one-time password is effective (can be used for a settlement) as described later is limited (such time limitation does not necessarily need to exist). To attract attention from the user, it is preferable to display "This one-time password is effective for five minutes from now" on the display 101 at an appropriate timing as illustrated in FIG. 13 (A), whether or not the display is made together with the one-time password.

As described above, the credit determination unit 223 of the settlement device 200 does not generate the provisional permission information in some cases, for example, when the credit determination is stopped or when the deposit balance of the user is insufficient. In such a case, no provisional permission information is transmitted to the user terminal 100. However, in this case, too, some data may be transmitted from the settlement device 200 to the user terminal 100 to display, on the display 101 of the user terminal 100, that no provisional permission information has been generated by the settlement device 200 (from a viewpoint of the user, the procedure of the settlement cannot be continued) and the reason thereof when needed.

In this case, for example, an image as illustrated in FIG. 13 (B) is displayed on the display 101 of the user terminal 100. The image is also displayed on the display 101 by the display control unit 122 in accordance with an instruction from the main control unit 121. In the case of this diagram, it is clear from a checked rectangular check box on the left side that the user is informed that the procedure of the settlement cannot be continued because the password is incorrect.

When the one-time password is displayed on the display 101 of the user terminal 100, the user passes the same to the settlement terminal 300 by inputting the same to the settlement terminal 300 (S931). When the one-time password is generated in advance, no additional work is needed when the one-time password is passed to the settlement terminal 300.

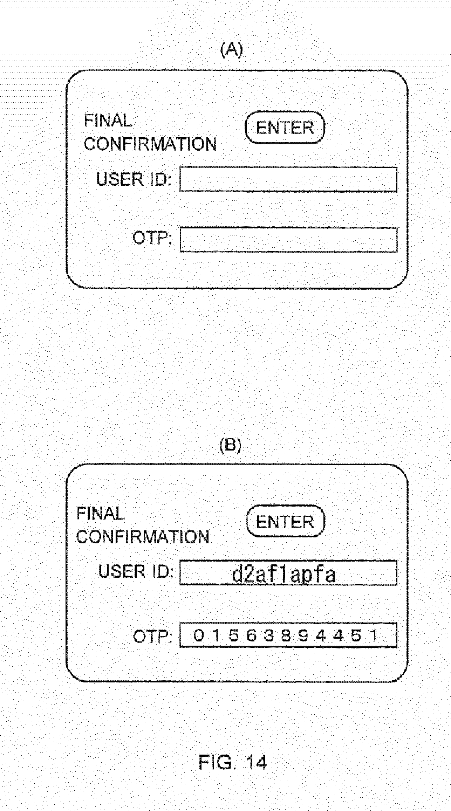

As described above, the settlement terminal 300 includes the touch panel display (not illustrated). The touch panel display performs display that prompts the user or the like to input a user ID and a one-time password, for example, as illustrated in FIG. 14 (A). Such display is performed by the display control unit 322 under control of the main control unit 321 of the settlement terminal 300. The user manually operates the touch panel display to input a user ID on the right side of a part indicated as "user ID" and a one-time password on the right side of a part indicated as "OTP".

The user inputs the user ID and the one-time password by operating the display of the settlement terminal 300 (FIG. 14 (B)). The user ID and the one-time password input by the user are displayed on the display under control of the display control unit 322 controlled by the main control unit 321 while the inputting is performed, and thus the user can perform the inputting of the user ID and the one-time password while checking the display.

In the present embodiment, the one-time password generated at the user terminal 100 is passed to the settlement terminal 300 through the manual inputting by the user, but the present invention is not limited thereto, and for example, after an image of the display 101 of the user terminal 100 is captured by a camera included in the settlement terminal 300 or connected with the settlement terminal 300, predetermined image processing may be performed on the image including the display 101 at the settlement terminal 300 so that the one-time password displayed on the display 101 can be specified by the settlement terminal 300. Alternatively, the one-time password displayed as a one-dimensional or two-dimensional bar code on the display 101 of the user terminal 100 may be read by a bar code reader included in the settlement terminal 300 so that the one-time password generated at the user terminal 100 is passed to the settlement terminal 300. Alternatively, the one-time password may be passed as data from the user terminal 100 to the settlement terminal 300 through wireless communication such as Bluetooth or infrared communication. When the one-time password is passed from the user terminal 100 to the settlement terminal 300 through wireless communication, the one-time password does not necessarily need to be displayed on the display 101 of the user terminal 100.

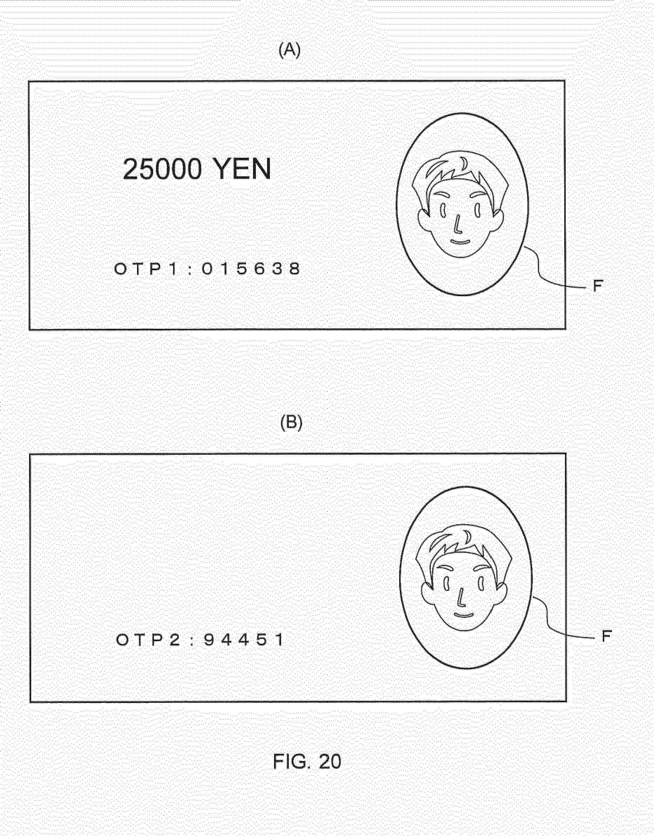

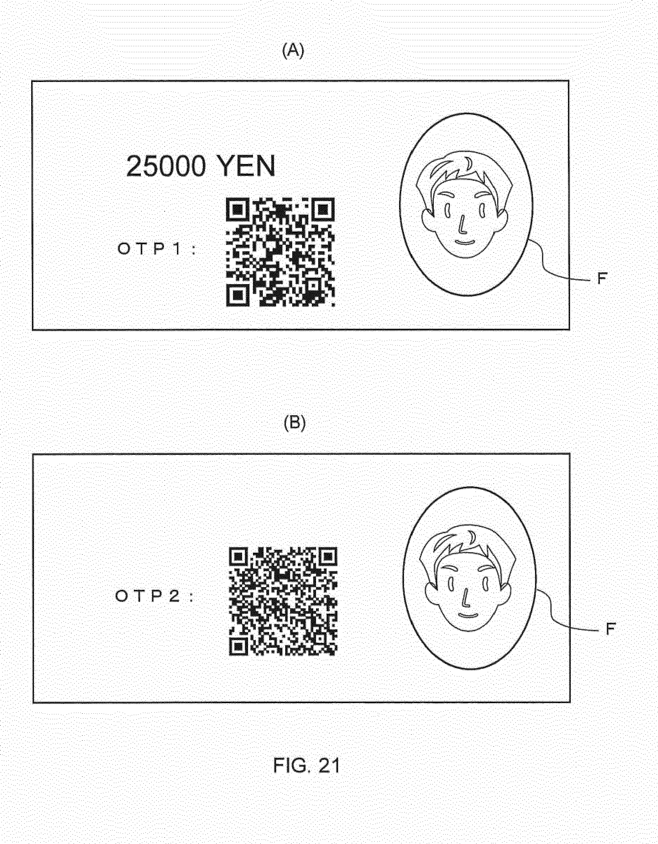

The method of passing the one-time password from the user terminal 100 to the settlement terminal 300 is not limited thereto. The user may print, on a paper sheet, the one-time password generated by the user terminal 100 or information specifying the one-time password by using, for example, a publicly known or already known printer owned by the user. In this case, the user does not need to generate the one-time password at a place (in or near a shop) at which the payment is to be performed, but may perform the generation at home or a place at which the printer exists. The paper sheet on which the one-time password is printed can be used as a tool for payment by passing over the paper sheet like a coin (or banknote) as a money voucher. The user can perform a settlement by passing the money voucher to the administrator of the settlement terminal 300. FIGS. 20 and 21 illustrate exemplary money vouchers.

FIG. 20 illustrates an exemplary money voucher on which a one-time password is printed: FIG. 20 (A) illustrates the front surface of a money voucher, and FIG. 20 (B) illustrates the back surface of the money voucher. The one-time password is printed on the money voucher. In the present embodiment, for example, the number "01563894451" is generated as the one-time password by the user terminal 100, the first half thereof is printed as a part (OTP1) of the one-time password on the front surface of the money voucher, and the second half thereof is printed as the rest (OTP2) of the one-time password on the back surface of the money voucher. The one-time password may be all printed on any of the front and back surfaces of the money voucher, but it is difficult for a malicious third person to secretly see or photograph the entire one-time password when the one-time password is printed on both surfaces of the money voucher in this manner. The face (face picture) F of a person (who is not necessarily the user having generated the one-time password) expected to perform payment by using the money voucher is printed on the money voucher illustrated in FIG. 20. With such a money voucher, it is possible to generate such a rule that the administrator of the settlement terminal 300 performs subsequent processing related to the settlement only when the face of a person having passed the money voucher to the administrator of the settlement terminal 300 matches the face printed on the money voucher, and the rule can be executed to reduce the risk that fraudulent use (unauthorized payment) of the money voucher F is performed by a person having fraudulently acquired the money voucher. This is effectively equivalent to authentication with the face of the user when the money voucher is used. In this example, the face F of the user or the like is printed on both of the front and back surfaces of the money voucher, but it is sufficient that the face F is printed on any one of the surfaces of the money voucher. The administrator of the settlement terminal 300 having received such a money voucher may input the part and the rest of the one-time password printed on the front and back surfaces of the money voucher to the settlement terminal 300 by using a numeric keypad or another input device or performing image capturing through a camera. When the face F is the face of a person other than the user, a person to which the money voucher is validly handed over from the user can perform a settlement by using the money voucher.

The money voucher illustrated in FIG. 21 is a paper sheet on which information used to specify a one-time password is printed instead of the one-time password. In the present embodiment, a two-dimensional bar code is employed as exemplary information used to specify the one-time password. In the case of the money voucher illustrated in FIG. 21, a part of the one-time password is printed the front surface of the money voucher, and the rest of the one-time password is printed on the back surface of the money voucher. A two-dimensional bar code printed on a surface illustrated in FIG. 21 (A) corresponds to the OTP1 illustrated in FIG. 20 (A) and a two-dimensional bar code printed on a surface illustrated in FIG. 21 (B) corresponds to the OTP2 illustrated in FIG. 20 (B), and values corresponding to OTP1 and OTP2, respectively, are read when the two-dimensional bar codes are read by a predetermined two-dimensional bar code reader. In the money voucher illustrated in FIG. 21, too, like the case of the money voucher illustrated in FIG. 20, the face F of a person expected to use the money voucher is printed on both of the front and back surfaces. The administrator of the settlement terminal 300 having received such a money voucher can input the one-time password to the settlement terminal 300 by reading the two-dimensional bar codes printed on the front and back surfaces of the money voucher by using, for example, a bar code reader after the above-described authentication through the face of the user.

The two-dimensional bar codes printed on both of the front and back surfaces in FIGS. 21 (A) and 21 (B) may be information that can specify monetary information by combining the two-dimensional bar codes. For example, the two-dimensional bar code illustrated in FIG. 21 (A) specifies the 100-digit string of "35890156389445112235879S......" partially including the monetary information of "01563894451". FIG. 21 (B) specifies a character at which the monetary information starts among the string. In the above-described example, 11 characters from the fifth character correspond to the monetary information, and thus information specified by the two-dimensional bar code in FIG. 21 (B) is the character of "5". When the number of digits of the monetary information is fixed, the information specified by the two-dimensional bar code in FIG. 21 (B) is the character of "5" only, but when the number of digits of the monetary information is variable, in addition to the character of "5", the number of "11" indicating that 11 characters starting therefrom are the monetary information needs to be specified by the two-dimensional bar code in FIG. 21 (B). The above-described two two-dimensional bar codes only need to be capable of specifying the monetary information through combination, and may be determined as appropriate: for example, a number that is n times larger than the monetary information is specified by the two-dimensional bar code illustrated in FIG. 21 (A), and the "n" is specified by the two-dimensional bar code illustrated in FIG. 21 (B). The administrator of the settlement terminal 300 having received such a money voucher can input the one-time password to the settlement terminal 300 by reading the two-dimensional bar codes printed on the front and back surfaces of the money voucher by using, for example, a bar code reader.

In the present embodiment, a large number of users exist, but a method by which each user passes a one-time password to the administrator of the settlement terminal 300 does not necessarily need to be same for all users, and each user may select desired one of the above-described methods of passing the one-time password. This is true in the present embodiment.

In any case, when the inputting of the user ID, the password, and the money amount information ends, the user or the administrator of the settlement terminal 300 clicks a button denoted by "Enter" displayed on the display.

When the user clicks the button denoted by "Enter", the input content is transferred from the data input and output unit 323 to the main control unit 321. When having received the input content, the main control unit 321 generates settlement application information. The settlement application information is information with which the administrator of the settlement terminal 300 requests the settlement device 200 for the definitive determination of a settlement. The settlement application information includes a settlement terminal ID for specifying the settlement terminal 300. The main control unit 321 collectively transfers the settlement application information, the user ID, and the one-time password to the transmission-reception unit of the settlement terminal 300 through the data input and output unit 323, and the settlement application information, the user ID, and the one-time password are transferred from the transmission-reception unit to the settlement device 200 through the network 400 (S932).

The settlement device 200 receives, at the transmission-reception unit, the three pieces of data transferred from the settlement terminal 300 (S925). The settlement application information, the user ID, and the one-time password transferred from the settlement terminal 300 are transferred to the main control unit 222 through the data input and output unit 221.

The main control unit 222 transfers, to the definitive determination unit 225, data of the settlement application information, the user ID, and the one-time password transferred from the settlement terminal 300. When having received the data, the definitive determination unit 225 reads position information associated with the settlement terminal ID included in the settlement application information from the position information recording unit 226.

When having received the settlement application information and the like, the main control unit 222 transfers an instruction to generate a one-time password to the OTP generation unit 227.

The instruction to generate a one-time password is provided with the user ID received by the main control unit 222. The OTP generation unit 227 reads an initial value and the number of times of generation that are associated with a user ID corresponding to the user ID from the OTP information recording unit 228.

The processing of one-time password generation performed by the OTP generation unit 227 by using information of the initial value and the number of times of generation recorded in the OTP information recording unit 228 is same as processing executed by the OTP generation unit 124 of the user terminal 100 specified by the user ID transferred together with the settlement application information having triggered the instruction to generate a one-time password. Thus, the processing of one-time password generation performed by the user terminal 100 and the processing of one-time password generation performed by the settlement device 200 are completely synchronized with each other unless a fraudulent activity by a third person occurs somewhere in the one-time password generation performed by the user terminal 100, the one-time password transmission from the settlement terminal 300 to the settlement device 200, and the like.

When having generated the one-time password, the OTP generation unit 227 transfers the same to the definitive determination unit 225 through the main control unit 222.

Before the definitive determination unit 225 reads the position information from the position information recording unit 226 and receives the one-time password generated by the OTP generation unit 227 from the OTP generation unit 227, the definitive determination unit 225 already has the one-time password generated at the user terminal 100 and transferred from the settlement terminal 300 through the main control unit 222, the position information generated at the user terminal 100 and transferred from the user terminal 100, and the time information generated by the credit determination unit 223 and transferred through the main control unit 222.

The definitive determination unit 225 performs definitive determination by using these pieces of information (S926).

The definitive determination is performed as described below.

In the definitive determination in the present embodiment, the definitive determination unit 225 determines, through comparison, whether the one-time password generated by the user terminal 100 and transferred from the settlement terminal 300 matches the one-time password generated by the OTP generation unit 227. One condition with which it is determined by the definitive determination that a settlement is possible is that the one-time passwords match each other. This condition is effective because, when both one-time passwords match each other, it can be assumed that there is no fraudulent activity in the entire process of the settlement, for example, there is no spoofing of a person having generated the one-time password by using the user terminal 100 nor the administrator of the settlement terminal 300 having send the one-time password by a malicious third person or there is no attack by a malicious third person while the one-time password is transmitted from the settlement terminal 300 to the settlement device 200.

In the definitive determination in the embodiment, the definitive determination unit 225 compares the position information generated by the user terminal 100 and transferred from the user terminal 100 with the position information read from the position information recording unit 226, and determines whether the distance between positions specified by the respective pieces of position information is shorter than a predetermined distance. One condition with which it is determined by the definitive determination that the settlement is possible in the present embodiment is, although not necessarily limited thereto, that the distance between the positions specified by the respective pieces of position information is shorter than the predetermined distance, for example, 20 m. This condition is effective because of a reason described below. Simply stated, the position information transferred from the user terminal 100 indicates that the user terminal 100 exists somewhere. Simply stated, the position information read from the position information recording unit 226 indicates where the settlement terminal 300 exists. When the positions specified by the respective pieces of position information are close to each other, the user operating the user terminal 100 and the administrator of the settlement terminal 300 are close to each other. The user and the administrator of the settlement terminal 300 who receives payment from the user are close to each other in most cases when payment is performed. For example, when payment is made at an eating place such as a restaurant, or a physical store, such a state normally occurs without exception. The probability that spoofing of the user or the administrator of the settlement terminal 300 by a third person is prevented increases when it is checked whether the distance between the user and the settlement terminal 300 is short through the above-described comparison of two pieces of position information. In addition, since the user moves whereas the position of the settlement terminal 300 is fixed to some extent, it is difficult for a third person not knowing where the user exists to perform spoofing of the user. Thus, it is largely meaningful to use a result of comparison of the two pieces of position information as a condition with which a settlement is allowed. The safety of a settlement using the settlement system increases as a distance (for example, 20 m in the above-described case) as a reference for whether to determine the positions specified by the respective pieces of position information is "short" decreases, and the reference distance may be determined as appropriate in accordance with, for example, the performance (the accuracy of the position of the user terminal 100 specified by the position information) of the GPS mechanism included in the user terminal 100.

The settlement terminal 300 does not exist in a physical store in some cases. For example, in a case of payment at a virtual store existing on the Internet, an online settlement is performed as widely known. In this case, it is not meaningful to set the distance between the user and the settlement terminal 300 as a condition with which the settlement is allowed. In the present embodiment, although not necessarily limited thereto, when the settlement terminal 300 does not exist at a physical store, no position information of the settlement terminal 300 is recorded in the position information recording unit 226 as a case of the settlement terminal ID of "4" in FIG. 8. In this case, when performing the definitive determination, the settlement device 200 may not perform (or may omit) the above-described comparison of two pieces of position information. No position information may be used in the entire settlement system. In particular, it is realistic to omit the position information comparison when the user passes a one-time password to the administrator of the settlement terminal 300 by using a money voucher on which the one-time password as monetary information in the present application invention or a two-dimensional bar code as specification information in the present application invention is printed.

In the definitive determination in the present embodiment, the definitive determination unit 225 compares a time specified by the time information generated by the credit determination unit 223 with a time at which the definitive determination is performed, and determines whether the time interval therebetween is equal to or shorter than a predetermined time interval. In the present embodiment, although not necessarily limited thereto, one condition with which it is determined by the definitive determination that a settlement is possible is that the time interval is equal to or longer than the predetermined time interval (in the present embodiment, the time interval is five minutes as described with reference to FIG. 13 (A)). This condition is effective because a time during which the one-time password generated at the user terminal 100 can be stolen and fraudulently used by a third person can be shortened by shortening the time interval, and the safety of a settlement can be further increased accordingly. In the present embodiment, a time at which the credit determination is performed by the credit determination unit 223 is used as a starting point for measuring the time interval, and a time at which the definitive determination is performed by the definitive determination unit 225 is used as an end point for measuring the above-described time interval. However, in particular, the starting point for measuring the time interval is not limited to the above-described timing. Through operation of the input device 102 of the user terminal 100 by the user, the starting point for measuring the time interval can be set to an appropriate timing after first inputting necessary for processing for a settlement is performed and before the definitive determination unit 225 performs the definitive determination. Specifically, the starting point for measuring the time interval can be set to an optional timing after S911 is started and before the definitive determination is performed by the definitive determination unit 225, in particular, an optional timing before a moment at which the provisional permission information is transferred from the settlement device 200 to the user terminal 100. Examples of the starting point that can be employed include a timing at which the money amount information is input at the user terminal 100, a timing at which a button denoted by the string of "Enter" displayed on the display 101 is clicked at the user terminal 100, a timing at which the money amount information or the like transmitted from the user terminal 100 is received by the settlement device 200, a timing at which the credit determination is started by the credit determination unit 223, and a timing at which transmission of the provisional permission information from the settlement device 200 to the user terminal 100 is started. In the settlement system, no expire date may be provided to a one-time password generated at the user terminal 100.

In the present embodiment, only when it is determined that the above-described three conditions are all satisfied, the definitive determination unit 225 of the settlement device 200 finally determines that payment from the user having the user terminal 100 to the administrator of the settlement terminal 300 is allowed. When any of the three conditions is not satisfied, the definitive determination unit 225 finally determines that the payment is not allowed. These determinations are referred to as the definitive determination.

When having performed the definitive determination, the definitive determination unit 225 generates (S927) definitive determination data as data indicating a result of the definitive determination, and transfers the same to the main control unit 222 together with, for example, the user ID. When payment is allowed by the definitive determination, the main control unit 222 having received the data performs processing to allow payment of money in an money amount specified by the money amount information having triggered the one-time password generation from the user having the user terminal 100 having generated the one-time password used to perform the definitive determination to the administrator of the settlement terminal 300 having send the one-time password used to perform the definitive determination. A result of the processing is recorded in, for example, the recording medium (not illustrated) built in the main control unit 222 or provided inside or outside the settlement device 200, and is notified to a related financial organization or the like when needed to process the payment. Contents recorded in the recording medium include at least information used to specify the user having performed the payment, information used to specify a person who receives the payment, and the one-time password used in the payment. The one-time password is recorded not to allow payment twice with the same one-time password. As part of the payment processing, the main control unit 222 having received the definitive determination data subtracts a money amount corresponding to money allowed to be paid from the user to the administrator of the settlement terminal 300. Money corresponding to the subtracted amount may be promptly transferred to the administrator of the settlement terminal 300 who receives the payment or may be temporarily held by the settlement device 200 or the administrator thereof. When a user written at the second place from the top at the credit information recording unit 224 pays 25000 yen, the main control unit 222 subtracts 25000 yen from the deposit balance of 2956002 yen, and rewrites the deposit balance to 2931002 yen.

When the payment is not allowed by the definitive determination, the main control unit 222 does not perform the above-described processing.

The main control unit 222 transfers the content of the definitive determination data to the data input and output unit 221, and the content is transferred, through the transmission-reception unit and the network 400, to the settlement terminal 300 having transmitted the settlement application information on which the definitive determination is based (S928).

The settlement terminal 300 receives the definitive determination data from the settlement device 200 (S933). The settlement terminal 300 receives the data at the transmission-reception unit thereof. The data received by the transmission-reception unit is transferred from the transmission-reception unit to the data input and output unit 323, and transferred from the data input and output unit 323 to the main control unit 321.

The main control unit 321 controls the display control unit 322 to display a content based on the definitive determination data on the display thereof. Under the control of the display control unit 322, appropriate display is performed on the display of the settlement terminal 300 (S934). When the content of the definitive determination data allows payment, the display indicates that the payment is allowed, or when the content of the definitive determination data does not allow payment, the display indicates that the payment is not allowed.

The settlement device 200 may transmit the content of the definitive determination data not only to the settlement terminal 300 but also to the user terminal 100. In this case, a content based on the definitive determination data, which is same as that displayed on the display of the settlement terminal 300 is displayed on the display 101 of the user terminal 100.

The flow of a settlement performed in the settlement system in the present embodiment is described above.

However, a settlement performed as described above is canceled in some cases. This is executed as described below.

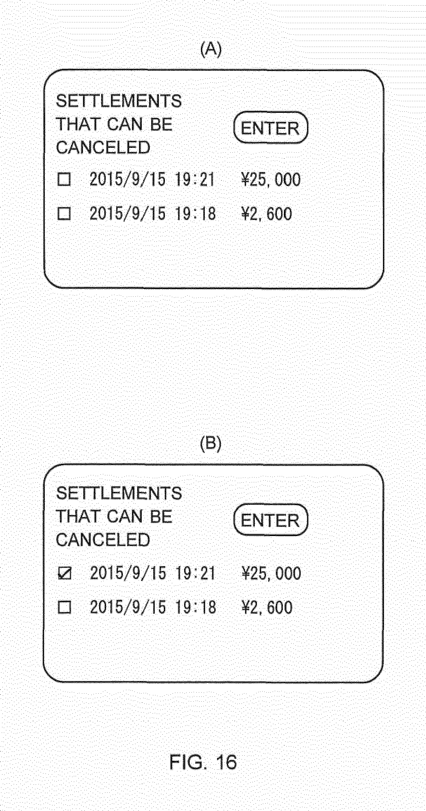

For example, the user and the administrator of the settlement terminal 300 desire to cancel a settlement performed in the past due to some reason. In this case, the user operates the input device 102 of the user terminal 100 to display a settlement cancellation screen on the display 101. FIG. 16 illustrates exemplary display on the display 101 in this case. In this example, the above-described settlement of 25000 yen performed by the user having a user ID of d2aflapfa is to be canceled.

As illustrated in FIG. 16, the display 101 displays a list of past settlements that can be canceled. In the present embodiment, among the past settlements, only a settlement that has ended at the settlement device 200 in, for example, 10 minutes before the settlement can be canceled, and thus not a large number of past settlements are displayed. In FIG. 16 (A), two payments of the payment of 25000 yen performed at 19:21 on September 15, 2015 and the payment of 2600 yen performed at 19:18 on the same day are displayed on the display 101 as targets that can be canceled. The user selects one of the payments by using the input device 102. FIG. 16 (B) illustrates a state in which the former of the two payments as cancellation targets is selected. When the user clicks a button denoted by "Enter", user terminal cancellation information including information specifying the payment of 25000 yen performed at 19:21 on September 15, 2015 as a cancellation target is generated. The user terminal cancellation information is generated by the main control unit 121 having received, through the data input and output unit 123, inputting from the input device 102. The user terminal cancellation information is transferred from the main control unit 121 to the transmission-reception unit through the data input and output unit 123, and transferred from the transmission-reception unit to the settlement device 200 through the network 400.

The administrator of the settlement terminal 300 performs the same processing to generate settlement terminal cancellation information. The administrator of the settlement terminal 300 operates the input device of the settlement terminal 300 to display a screen same as that illustrated in FIG. 16 on the display of the settlement terminal 300. The display displays a list of past settlements that can be canceled. In the present embodiment, among the past settlements, only a settlement that has ended at the settlement device 200 in, for example, 10 minutes before the settlement can be canceled, but the number of settlements performed by using one settlement terminal 300 is typically larger than the number of settlements performed by using one user terminal 100, and thus a larger number of settlements than the number of settlements illustrated in FIG. 16 are displayed on the display of the settlement terminal 300. The administrator of the settlement terminal 300 operates the input device of the settlement terminal 300 to select one of the settlements. Only the date and time and the money amount of a settlement are displayed as information used to specify the past settlement in the example illustrated in FIG. 16, but it is useful that, in addition to the information, information used to specify a user having performed the settlement, for example, the user ID thereof is displayed on the display to prevent false selection by the administrator of the settlement terminal 300. The administrator of the settlement terminal 300 operates the input device to generate settlement terminal cancellation information including information specifying the payment of 25000 yen performed by the user having the user ID of d2aflapfa at 19:21 on September 15, 2015. The settlement terminal cancellation information is generated by the main control unit 321 having received, through the data input and output unit 323, inputting from the input device. The settlement terminal cancellation information is transferred from the main control unit 321 to the transmission-reception unit through the data input and output unit 323, and transferred from the transmission-reception unit to the settlement device 200 through the network 400.

The settlement device 200 receives the user terminal cancellation information and the settlement terminal cancellation information at the transmission-reception unit. These pieces of information are transferred to the main control unit 222 through the data input and output unit 221. When having received the two pieces of information, the main control unit 222 determines whether past settlements specified by the user terminal cancellation information and the settlement terminal cancellation information are identical to each other. When the past settlements are identical to each other as a result, the main control unit 222 performs processing to cancel the past settlement. When only one of the user terminal cancellation information and the settlement terminal cancellation information is received or when the two pieces of information are received but the past settlements specified by the user terminal cancellation information and the settlement terminal cancellation information are not identical to each other, the main control unit 222 does not perform the processing of past settlement cancellation. The main control unit 222 records a result of the settlement cancellation in, for example, the recording medium (not illustrated) built in the main control unit 222, and notifies the result to a related financial organization or the like when needed to process the cancellation. In addition, the main control unit 222 cancels the above-described rewriting of the deposit balance at the credit information recording unit 224, and sets the deposit balance back to a value before the payment.

The above-described cancellation processing is more practical when used as described below, for example.

Since a one-time password in the present embodiment, which is used like the credit card number of a conventional credit card, is basically used one and thus is a disposable password, the probability of fraudulent use thereof is extremely low with almost no assumed cases. However, the probability is not zero that a one-time password generated at the user terminal 100 is stolen and used by a third person while the one-time password is transferred to the settlement device 200 through the settlement terminal 300 by the user.

In the above-described embodiment, a user ID or other information for specifying a user, such as a signature, a fingerprint, or a vein characteristic is transmitted from the settlement terminal 300 to the settlement device 200. When, among these pieces of information, biological information such as a fingerprint or a vein characteristic is used as a material for specifying a user performing payment by using the one-time password transferred from the settlement terminal 300, it is extremely difficult for a third person having stolen the one-time password to perform spoofing of the legitimate user. However, when the user ID is only a material transferred together with the one-time password from the settlement terminal 300 to the settlement device 200 to specify the user and not only the one-time password but also the user ID are stolen, it may be unable to prevent spoofing by a third person because the user ID is normally not changed but fixed. In addition, as described later in a modification, when the one-time password is transferred from the settlement terminal 300 to the settlement device 200, no information, such as the user ID, for specifying the user having generated the one-time password at the own user terminal 100 may be attached to the one-time password. In such a case, the one-time password generated upon generation of the provisional permission information after it is checked that the user is legitimate and credit determination of the payment capability of the user is successful has such characteristics of money, check, or the like that, with the one-time password, not only the user having generated the one-time password by using the own user terminal 100 but also anybody can perform a payment by passing the one-time password to a person. When the settlement system handles such a one-time password, the one-time password can be used by a third person having stolen the one-time password in place of the user having generated the one-time password at the own user terminal 100.

Such fraudulent use of the one-time password by a third person can be prevented by the above-described cancellation processing.

As described above, in the settlement system according to the present embodiment, the definitive determination data is transferred from the settlement device 200 to the settlement terminal 300, and the content of the definitive determination data is displayed on the display included in the settlement terminal 300.

It is assumed that the one-time password has been fraudulently used by a third person. For example, the stolen one-time password is transmitted to the settlement device 200 from the settlement terminal 300 managed by a person other than a person to which the user intends to pass the one-time password generated at the own user terminal 100 to perform a payment. In this case, the payment based on the one-time password is approved by the definitive determination unit 225 of the settlement device 200 in some cases. As described above, the three requirements of the one-time password matching, the short distance between the user terminal 100 and the settlement terminal 300, and the valid expire date of the one-time password need to be all satisfied in the present embodiment when the definitive determination unit 225 performs positive determination for the payment based on the one-time password transferred from the settlement terminal 300. Thus, when the one-time password stolen from the user and transferred to the settlement device 200 matches the one-time password produced by the OTP generation unit 227 of the settlement device 200, the definitive determination unit 225 does not allow a settlement unless the other two requirements are satisfied. However, the two conditions are satisfied in some cases, and the two conditions are not necessarily essential in the settlement system in the present embodiment, and thus the two conditions are not considered at the definitive determination unit 225 in some cases. In such a case, when the above-described one-time password matching condition is satisfied, the definitive determination unit 225 of the settlement device 200 approves the payment based on the one-time password.

In this case, the definitive determination data is transferred from the settlement device 200 to the settlement terminal 300. The definitive determination data indicates that a settlement is allowed. However, it is a problem that the administrator of the settlement terminal 300 to which the payment is made is not a person to whom the user intends to perform the payment. At this stage, the definitive determination data has not reached the settlement terminal 300, the administrator of which is a person to whom the user intends to perform the payment. As described above, the definitive determination data is transferred to the user terminal 100 in some cases. However, if the definitive determination data is transferred to the user terminal 100 at this stage, its content is such that the settlement device 200 allows a payment from the user to a person to whom the user does not intend to perform the payment. Depending on the content of information displayed on the display of the user terminal 100, the user potentially does not notice from the content that the one-time password generated at the own user terminal 100 is fraudulently used by a third person.

For example, after the one-time password generated at the own user terminal 100 by the user is already used by a third person, in other words, after the payment to someone has come into effect with the one-time password, the user passes the one-time password to the person to whom the user intends to perform the payment. In this hypothetical case, the one-time password is transferred from the settlement terminal 300, the administrator of which is the person to the settlement device 200. However, since the one-time password is already used for a past payment, the definitive determination unit 225 of the settlement device 200 does not allow the payment based on the one-time password again. For example, it can be determined that the one-time password is used in the past (for example, in a certain time range) by searching, through the definitive determination unit 225, whether a one-time password same as the one-time password as the current target of the definitive determination exists among one-time passwords recorded in the above-described recording medium: when the same one-time password exists, it is determined that the one-time password is used in the past.

Accordingly, the definitive determination data transferred from the settlement device 200 to the settlement terminal 300 in this case indicates that the settlement is not allowed. The administrator of the settlement terminal 300, who is the person to whom the payment is intended to be made, tells the user having passed the one-time password that the settlement is not allowed by the settlement device 200.

Having told this, the user recognizes that the one-time password is fraudulently used in the past, and can execute the above-described cancellation processing. Accordingly, the one-time password can be prevented from being fraudulently used. The settlement device 200 can recognize as described above that there is the second attempt to use the one-time password. The settlement device 200 may notify the user terminal 100 of the attempt or the existence of a person who intends to fraudulently use the one-time password.

[Modification]

The following describes a settlement system according to a modification. The settlement system in the modification is basically configured same as the settlement system according to the first embodiment, and the flow of a settlement executed by the settlement system in the modification is same as that of the settlement system according to the first embodiment.

The settlement system according to the first embodiment and the settlement system according to the modification are different from each other in the timing and method of the one-time password generation and the method of the definitive determination at the definitive determination unit 225 of the settlement device 200, and accordingly, in data transferred from the settlement terminal 300 to the settlement device 200.

In the first embodiment, as described above, when settlement application information and a one-time password are transmitted from the settlement terminal 300 to the settlement device 200, a user ID is transmitted together with them.

The one-time password generated at the user terminal 100 and transmitted from the settlement terminal 300 is compared, at the definitive determination unit 225, with the one-time password generated at the OTP generation unit 227 of the settlement device 200, and thus needs to be transferred together with the settlement application information from the settlement terminal 300 to the settlement device 200. The first embodiment describes, as a reason for the necessity of transmission of the user ID at transmission of the settlement application information and the one-time password from the settlement terminal 300 to the settlement device 200, that "the information used to specify the user is needed to determine under which of conditions different for individual users a one-time password is to be generated at the settlement device 200 because a condition for the settlement device 200 to generate a one-time password is different between users (for example, initial values allocated to individual users are different from each other in the present embodiment, but a function or algorithm to be used may be changed between the users)". In other words, the logic in the first embodiment is such that: the user ID for specifying the user is transferred together with the settlement application information and the one-time password from the settlement terminal 300 to the settlement device 200 in the first embodiment because the one-time password transmitted from the settlement terminal 300 and generated at the user terminal 100 is compared, at the definitive determination unit 225, with the one-time password generated at the OTP generation unit 227 of the settlement device 200, and the settlement device 200 needs to generate the one-time password for the user requesting the settlement so that both one-time passwords match during the settlement processing, but a correct one-time password cannot be generated unless the user requesting the settlement is specified. Thus, in the first embodiment, the user ID or other information for specifying the user, such as a signature, a fingerprint, or a vein characteristic is transmitted together with the settlement application information and the one-time password from the settlement terminal 300 to the settlement device 200.

However, it is possible to correctly compare at the definitive determination unit 225 of the settlement device 200, the one-time password generated at the user terminal 100 and the one-time password generated at the settlement device 200 without transferring information used to specify the user, for example, the user ID or the information such as a signature, a fingerprint, or a vein characteristic from the settlement terminal 300 to the settlement device 200 in addition to the settlement application information and the one-time password.

The present modification relates to such a settlement system.

In the settlement system according to the modification, as described above, when the settlement application information is transmitted from the settlement terminal 300 to the settlement device 200, the one-time password generated at the user terminal 100 is added to the settlement application information, but information, such as the user ID, used to specify a user who intends to perform the settlement is not added.

However, in the settlement system according to the modification, the OTP generation unit 227 generates the one-time password at a timing different from that in the first embodiment. In the first embodiment, a one-time password is generated when an instruction to generate the one-time password is received from the main control unit 222, but the instruction is issued after the main control unit 222 has received, from the data input and output unit 221, the settlement application information and the one-time password transferred from the settlement terminal 300.

However, in the modification, the OTP generation unit 227 generates a one-time password simultaneously with generation of the provisional permission information by the credit determination unit 223 or after the generation without delay, at least before the settlement application information and the one-time password are transferred from the settlement terminal 300. In the modification, although not limited thereto, when the provisional permission information generated by the credit determination unit 223 is transferred from the credit determination unit 223 to the main control unit 222, the main control unit 222 transfers an instruction to generate a one-time password to the OTP generation unit 227 together with the user ID for which the provisional permission information is generated. Having received the instruction, the OTP generation unit 227 generates a one-time password for a user having the user ID received from the main control unit 222 by using the user ID, more precisely, by using an initial value associated with the user ID. The method of generating the one-time password may be same as that in the first embodiment. The OTP generation unit 227 transfers the generated one-time password to the definitive determination unit 225 without delay. In the modification, the processing so far is ended simultaneously with generation of the provisional permission information by the credit determination unit 223 or after the generation without delay, at least before the settlement application information and the one-time password are transferred from the settlement terminal 300.

The definitive determination unit 225 holds the one-time password transferred from the OTP generation unit 227. In this case, the definitive determination unit 225 holds a large number of one-time passwords for a large number of users, which are generated by the OTP generation unit 227 when the users holding the respective user terminals 100 initiate payments.

In such a state, for example, a user transmits the one-time password generated at the user terminal 100 and held by the user to the settlement device 200 through the settlement terminal 300 together with the settlement application information. The user may pass the one-time password to the administrator of the settlement terminal 300 by a method same as that in the first embodiment. The one-time password is passed from the user to the administrator of the settlement terminal 300 by using any one of the two kinds of money vouchers described in the first embodiment in some cases.

In any case, the settlement application information and the one-time password transferred from the settlement terminal 300 through the network 400 is received by the transmission-reception unit of the settlement device 200 and transferred to the main control unit 222 through the data input and output unit 221. The main control unit 222 transfers the settlement application information and the one-time password thus received to the definitive determination unit 225.

In this state, the definitive determination unit 225 holds the one-time password received from the main control unit 222 and the large number of one-time passwords generated by the OTP generation unit 227 and already received from the OTP generation unit 227. The definitive determination unit 225 compares the one-time password received from the main control unit 222 with the large number of one-time passwords generated by the OTP generation unit 227 and already received from the OTP generation unit 227. When the one-time password received from the main control unit 222 matches one of the large number of one-time passwords generated by the OTP generation unit 227 and already received from the OTP generation unit 227, the definitive determination unit 225 allows a payment from the user to the administrator of the settlement terminal 300 having sent the settlement application information and the one-time password, or when the one-time password received from the main control unit 222 does not match any of the large number of one-time passwords generated by the OTP generation unit 227 and already received from the OTP generation unit 227, the definitive determination unit 225 does not allow the payment. Although the definitive determination unit 225 compares the one-time password generated at the user terminal 100 with the large number of one-time passwords generated by the OTP generation unit 227, the number of one-time passwords generated at the OTP generation unit 227 of the settlement device 200 before the settlement application information of a payment by the user is transferred from the settlement terminal 300 to the settlement device 200 after the settlement processing using a certain user terminal 100 is started and the provisional permission information is generated is large but not enormous particularly when each one-time password generated at the user terminal 100 has an expire date, and one-time passwords produced for a plurality of users at the OTP generation unit 227 in the same duration are not likely to include identical ones.

Thus, similarly to the case of the first embodiment, the definitive determination unit 225 can correctly generate the definitive determination data by the method of the modification.

Similarly to the case of the first embodiment, when performing the definitive determination, the definitive determination unit 225 may use the position information and the time information.

However, in the modification, when the comparison of the one-time password generated at the user terminal 100 and transferred through the settlement terminal 300 with the large number of one-time passwords generated at the OTP generation unit 227 of the settlement device 200 is performed first and any of the large number of one-time passwords generated at the OTP generation unit 227 matches the one-time password transferred from the settlement terminal 300, the position information of a user terminal 100 associated with a user ID used to generate the one-time password matching the one-time password transferred from the settlement terminal 300 among the large number of one-time passwords generated at the OTP generation unit 227 may be distinguished from the position information transferred from another user terminal 100 and may be specified as the position information on the user terminal 100 side used for the definitive determination.

Similarly, the time information associated with the user ID used to generate the one-time password matching the one-time password transferred from the settlement terminal 300 among the large number of one-time passwords generated at the OTP generation unit 227 may be distinguished from time information when the provisional permission information produced to perform a settlement by using another user terminal 100 is produced and may be specified as the time information used for the definitive determination.

In this manner, the definitive determination data can be correctly generated.

<<Second embodiment>>

The following describes a settlement system according to a second embodiment.

The settlement system according to the second embodiment is substantially same as the settlement system according to the first embodiment, and the flow of the settlement processing thereof is substantially same as that in the first embodiment.

Similarly to the case of the first embodiment, the settlement system according to the second embodiment includes a large number of user terminals 100, one settlement device 200, and a large number of settlement terminals 300, which are connectable to the network 400.

The settlement system according to the second embodiment is different from the settlement system according to the first embodiment in that, simply stated, in the settlement system according to the first embodiment, the user does not indicate, to the settlement device 200, a person to whom the user intends to perform a payment, but in the settlement system according to the second embodiment, the user indicates, to the settlement device 200, a person to whom the user intends to perform a payment.

To achieve this, the settlement system according to the second embodiment is configured as described below. The following describes the configuration of the settlement system according to the second embodiment together with the flow of processing performed in the second embodiment.

The following description is first made on the user terminal 100 according to the second embodiment.

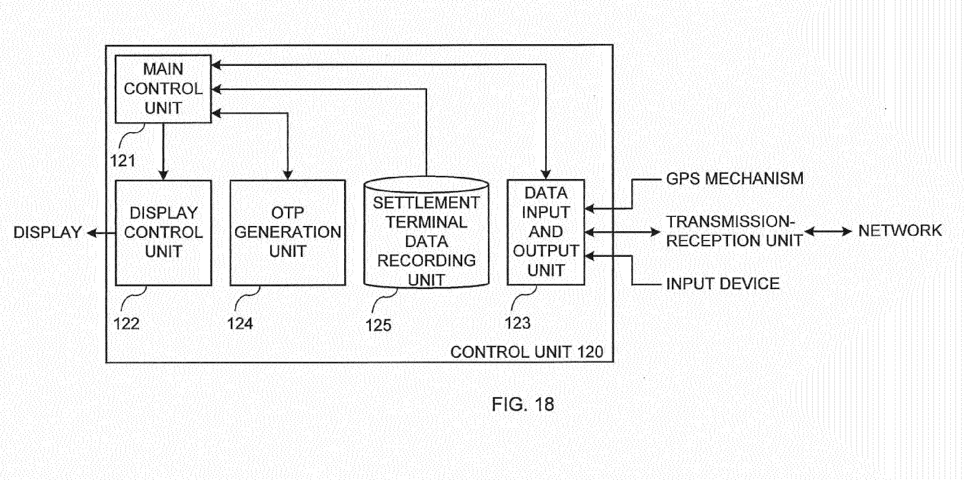

In the second embodiment, too, similarly to the case of the first embodiment, the user terminal 100 includes the control unit 120 configured to perform information processing. The control unit 120 is same as the control unit 120 in the user terminal 100 according to the first embodiment, but the control unit 120 according to the second embodiment includes a settlement terminal data recording unit 125, which is not provided in the case of the first embodiment (FIG. 18).

The settlement terminal data recording unit 125 records data of the settlement terminal 300. Specifically, the settlement terminal data recording unit 125 records data as illustrated in FIG. 8, which is recorded in the position information recording unit 226 of the settlement device 200 in the first embodiment. Specifically, the settlement terminal data recording unit 125 records a settlement terminal ID and the position information of each settlement terminal 300 in association with each other. The meaning of the settlement terminal ID and the position information of the settlement device 200 is same as that in the first embodiment. The settlement terminal ID and the position information recorded in the settlement terminal data recording unit 125 completely match those recorded in the position information recording unit 226 of the settlement device 200. However, the settlement terminal data recording unit 125 may record, in addition to the settlement terminal ID and the position information of each settlement terminal 300, the name, phone number, and address of a restaurant or a shop at which the settlement terminal 300 is placed, and a logo or the like useful for the user to recognize the restaurant or the shop in association with the settlement terminal ID.

In the settlement system according to the first embodiment, when having started the settlement processing at S911, the user subsequently inputs a user ID, a password, and a settlement money amount to the own user terminal 100.

However, in the settlement system according to the second embodiment, the user inputs, to the own user terminal 100, information specifying a payee to which a payment is performed in addition to a user ID, a password, and a settlement money amount. The information specifying a payee is, in effect, information specifying the settlement terminal 300 placed at a shop or the like as the payee.

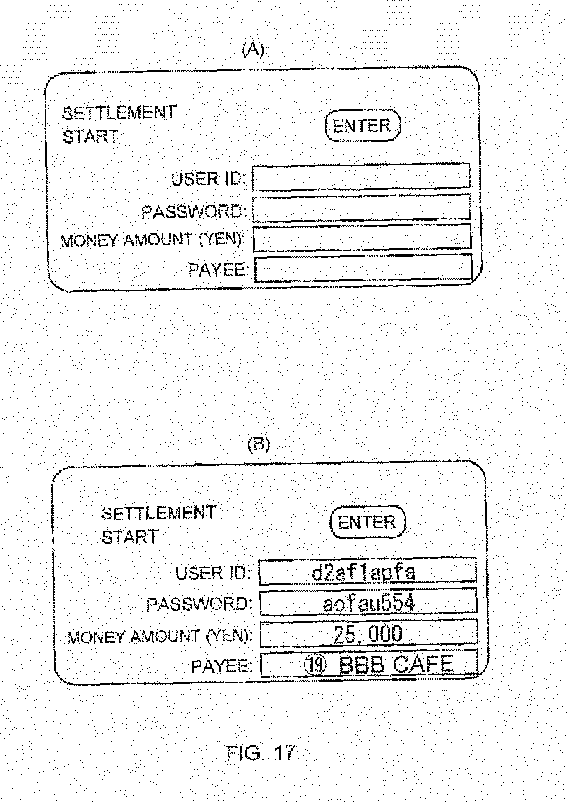

In the second embodiment, when the settlement processing is started, an image as illustrated in FIG. 17 (A) is displayed on the display 101 of the user terminal 100. Unlike the case of the first embodiment, the image in the second embodiment prompts the user to input the information specifying a payee in addition to a user ID, a password, and a settlement money amount. Similarly to the case of the first embodiment, the image is generated by the display control unit 122 under control of the main control unit 121 and displayed on the display 101 by the display control unit 122.

Similarly to the case of the first embodiment, the user inputs a user ID, a password, and a settlement money amount by using the input device 102. In addition, the user inputs information used to specify a payee. The payee information may be input by the user typing the name or the like of a shop as a payee, but when it is important to reduce a load on the user and reduce error in inputting by the user, it is preferable that a shop or the like as a payee is selected from among predetermined candidates by the user. In the present embodiment, the selection is performed, which not necessarily true.

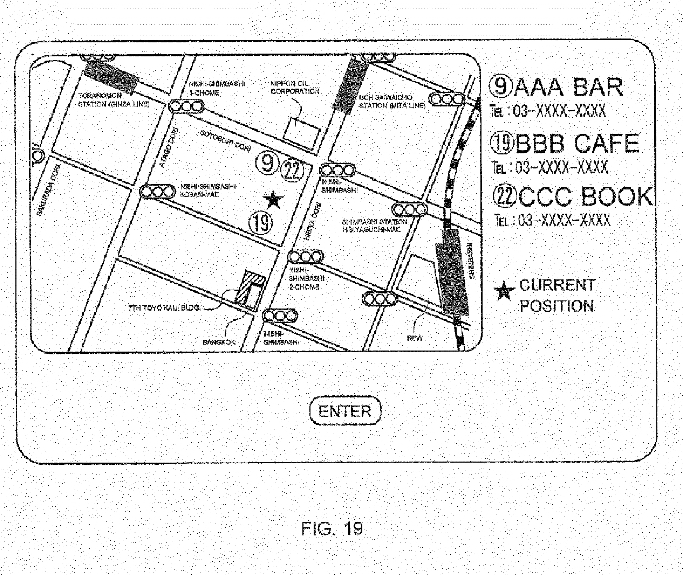

When the user is about to perform the payee inputting, a window as illustrated in FIG. 19 pops up in the present embodiment. In the window, candidates for a shop or the like that exists near the current position of the user indicated by a star and at which the settlement terminal 300 is placed are displayed as, for example, the numbers of 9, 19, and 22 each surrounded by a circle on a map illustrating the vicinity of the current position of the user. Although not limited thereto, the encircled numbers of 9, 19, and 22 are equivalent to settlement terminal IDs in the present embodiment. The name and the phone number of each shop or the like are displayed outside the map, in this example, on the right side of the map in association with the reference signs of 9, 19, and 22 indicated on the map so that the user can correctly select the shop or the like.

Selection of the range of the displayed map, specification of the current position of the user displayed on the map, and selection of a shop or the like as a payee candidate are performed by the main control unit 121 by using the position information indicating the current position of the user terminal 100 and transferred from the GPS mechanism of the user terminal 100 to the main control unit 121 through the data input and output unit 123. In the present embodiment, the GPS mechanism generates position information of the position at which the user terminal 100 exists at this moment. In addition, production of information related to the shop or the like and displayed outside the map is performed by the main control unit 121. The main control unit 121 may perform part of such processing by using software recorded in an external cloud connected through the network 400. In this case, for example, the settlement terminal data recording unit 125 may exist outside the user terminal 100.

Specifically, when performing the above-described display on the display 101, the main control unit 121 selects the range of the map to be displayed on the display 101 by an already known or publicly known method used by, for example, Google map (trademark) provided by Google Inc. based on the position information indicating the current position of the user terminal 100. In addition, the main control unit 121 can specify the current position of the user terminal 100 based on the position information, and thus displays a star mark at the current position on the map. The main control unit 121 reads, in addition to the settlement terminal ID of the settlement terminal 300 having position information specifying a position close to a position specified by the position information indicating the current position of the user terminal 100, data such as the name and the phone number of the shop or the like, which is associated with the position information, from the settlement terminal data recording unit 125. A candidate such as a shop that is close to the position of the user and to which the user performs a payment can be displayed on the map by displaying, with each position information, a settlement terminal ID surrounded by a circle at a position on the map, which is indicated by the position information of each shop or the like. For example, the name and the phone number of the shop or the like associated with the settlement terminal ID may be displayed outside the map. The number of displayed candidates such as shops is not limited to three. The main control unit 121 transfers the information to the display control unit 122, and causes the display control unit 122 to display, on the display 101, an image as illustrated in FIG. 19.

The user operates the input device 102 to select one of the candidates of 9, 19, and 22, and clicks a button denoted by "Enter". Accordingly, the popped-up window illustrated in FIG. 19 is closed, and the settlement terminal ID and the name of the shop or the like selected by the user are automatically displayed in a box on the right side of a part denoted by "Payee" as illustrated in FIG. 17 (B). In this example, "BBB CAFE", at a shop or the like of which the settlement terminal 300 having the settlement terminal ID of 19 is installed, is selected as a target to which the user performs a payment. Display on the display 101 is controlled by the display control unit 122 under control of the main control unit 121. Accordingly, the user ID, the password, the settlement money amount, and the information specifying a payee are input to the user terminal 100. These four pieces of information are transferred from the data input and output unit 123 to the main control unit 121.

When having ended the inputting of the user ID, the password, and the money amount information, and the information used to specify a payee, the user clicks a button denoted by "Enter" and displayed on the display 101.

When the user clicks the button denoted by "Enter", the main control unit 121 collectively transfers, to the data input and output unit 123, in addition to the user ID, the password, and the money amount information, the information specifying a payee, the position information, and the terminal information recorded in the recording means (not illustrated) of the main control unit 121. The data input and output unit 123 collectively transfers the data to the transmission-reception unit, and the transmission-reception unit collectively transfers the data to the settlement device 200 through the network 400. This corresponds to the processing at S913 in the first embodiment.

The settlement device 200 receives the data in a manner similar to that of the processing at S921 in the first embodiment, and executes the credit determination in a manner similar to that of the processing at S922 in the first embodiment. Information transferred from the user terminal 100 to the settlement device 200 other than the information used to specify a payee in the second embodiment is handled as in the case of the first embodiment. The information used to specify a payee and transferred from the user terminal 100 to the settlement device 200 is not used for the credit determination processing in the second embodiment, and thus the case of the second embodiment is not different from the case of the first embodiment.

In the second embodiment, the information used to specify a payee is transferred from the data input and output unit 221 to the definitive determination unit 225 through the main control unit 222. The information used to specify a payee only needs to reach the definitive determination unit 225 when the definitive determination unit 225 performs the definitive determination.

The provisional permission information generation (S923) and the provisional permission information transmission (S924) executed by the settlement device 200, the provisional permission information reception (S914) and the one-time password generation (S915) executed by the user terminal 100, each process of the user ID and one-time password inputting (S931) and the user ID and one-time password transmission (S932) performed by the settlement terminal 300, and each process of the user ID and one-time password reception (S925) performed by the settlement device 200, which are described in the first embodiment are similarly executed in the second embodiment, too.

During such a process, the user may pass a one-time password to the administrator of the settlement terminal 300 by a method same as that in the first embodiment. The one-time password is passed from the user to the administrator of the settlement terminal 300 by using any one of the two kinds of money vouchers described in the first embodiment in some cases.

Then, similarly to the first embodiment, the definitive determination is executed (S926).

In the definitive determination according to the first embodiment, the first condition with which a settlement is allowed by the definitive determination is that the one-time password generated by the user terminal 100 and transferred from the settlement terminal 300 and the one-time password generated by the OTP generation unit 227 match each other through comparison. The second condition with which a settlement is allowed by the definitive determination is that the position information generated by the user terminal 100 and transferred from the user terminal 100 and the position information read from the position information recording unit 226 are compared with each other and the distance between the positions specified by the respective pieces of position information is shorter than a predetermined distance. The third condition with which a settlement is allowed by the definitive determination is that the time specified by the time information generated by the credit determination unit 223 and the time at which the definitive determination is performed are compared with each other and the time interval therebetween is equal to or longer than a predetermined time interval. Only when these three conditions are all satisfied, the definitive determination unit 225 generates positive definitive determination data that allows the settlement.

However, in the second embodiment, the fourth condition with which a settlement is allowed by the definitive determination is that the settlement terminal ID generated by the user terminal 100 and transferred from the user terminal 100 and the settlement terminal ID of the settlement terminal 300 having sent the settlement application information and the like match each other through comparison. Thus, in the present embodiment, only when the above-described four conditions are all satisfied, the definitive determination unit 225 allows the settlement. Similarly to the first embodiment, the second and third conditions may be omitted among the above-described conditions.

Processing executed in the settlement system according to the second embodiment after the definitive determination data is generated is same as that in the first embodiment.

## Claims

1.   A money voucher comprising, a paper sheet, and monetary information printed on the paper sheet, wherein the monetary information is made of a number, a character, a symbol, or a series thereof and has a monetary value.

2.   The money voucher according to claim 1, wherein part of the monetary information is printed on one of surfaces of the paper sheet, and the rest of the monetary information is printed on the other surface of the paper sheet.

3.   A money voucher comprising, a paper sheet, and specification information printed on the paper sheet and to specify monetary information, wherein the monetary information is made of a number, a character, a symbol, or a series thereof and has a monetary value.

4.   The money voucher according to claim 3, wherein the specification information is made of first specification information used to specify part of the monetary information, and second specification information used to specify the rest of the monetary information, the first specification information being printed on one of surfaces of the paper sheet, the second specification information being printed on the other surface of the paper sheet.

5.   The money voucher according to claim 3, wherein the specification information is made of third specification information and fourth specification information used together to specify the monetary information, the third specification information being printed on one of surfaces of the paper sheet, the fourth specification information being printed on the other surface of the paper sheet.

6. The money voucher according to any one of claims 1 to 5, wherein the face of a person expected to use the money voucher is printed on the paper sheet.

FIG. 1

EP 3 536 515 A1

FIG. 2

FIG. 3

EP 3 536 515 A1

FIG. 4

FIG. 5

FIG. 6

CONTROL UNIT 220

MAIN CONTROL UNIT — 222

DATA INPUT AND OUTPUT UNIT — 221

CREDIT DETERMINATION UNIT — 223

CREDIT INFORMATION RECORDING UNIT — 224

DEFINITIVE DETERMINATION UNIT — 225

POSITION INFORMATION RECORDING UNIT — 226

OTP GENERATION UNIT — 227

OTP INFORMATION RECORDING UNIT — 228

TRANSMISSION-RECEPTION UNIT

NETWORK

| USER ID | PASSWORD | TERMINAL INFORMATION | DEPOSIT BALANCE (¥) |
|---|---|---|---|
| 12385adf0 | fai2fa60 | 123456789 | 10000000 |
| d2af1apfa | aofau554 | 012457854 | 2956002 |
| fd8a4op44 | mauoa365 | 658799365 | 1505612 |
| nm465fai3 | 009afaoi | 709658456 | 204550 |
| faio897a8 | pl36a7uf | 325778456 | 5002230 |
| . | . | . | . |
| . | . | . | . |
| . | . | . | . |
| . | . | . | . |
| . | . | . | . |
| . | . | . | . |
| . | . | . | . |
| 90afa45a5 | 5f0a65ak | 201147775 | 700445 |
| 21orz4651 | a4awktk0 | 123388440 | 0 |

FIG. 7

| SETTLEMENT TERMINAL ID | POSITION INFORMATION | |
|---|---|---|
| 1 | 36° 18' 48. 3"N | 139° 21' 17. 5"E |
| 2 | 48° 34' 25. 3"N | 13° 24' 56. 8"E |
| 3 | 40° 44' 33. 2"N | 73° 59' 36. 1"W |
| 4 | — — — — — — — — — — — — — — — | |
| 5 | 33° 56' 41. 4"S | 151° 14' 46. 7"E |
| . | . | |
| . | . | |
| . | . | |
| . | . | |
| . | . | |
| . | . | |
| n − 1 | 41° 24' 14. 2"N | 2° 11' 09. 1"E |
| n | 22° 54' 37. 7"S | 43° 14' 27. 6"W |

FIG. 8

| USER ID | INITIAL VALUE | | THE NUMBER OF TIMES OF GENERATION |
|---|---|---|---|
| 12385adf0 | 001245533 | 123458899 | 12 |
| d2af1apfa | 178655336 | 458752225 | 233 |
| fd8a4op44 | 398756899 | 157846355 | 0 |
| nm465fai3 | 569869896 | 700002321 | 4501 |
| faio897a8 | 755003665 | 923658855 | 990 |
| . | . | . | . |
| . | . | . | . |
| . | . | . | . |
| . | . | . | . |
| . | . | . | . |
| . | . | . | . |
| . | . | . | . |
| 90afa45a5 | 4577778123 | 6356899677 | 9455 |
| 21orz4651 | 6898100021 | 3236955441 | 214651 |

FIG. 9

FIG. 10

FIG. 11

CONTROL UNIT 320

MAIN CONTROL UNIT — 321

DISPLAY CONTROL UNIT — 322

DATA INPUT AND OUTPUT UNIT — 323

INPUT DEVICE

TRANSMISSION-RECEPTION UNIT

NETWORK

DISPLAY

(A)

SETTLEMENT
START        ENTER

USER ID:

PASSWORD:

MONEY
AMOUNT (YEN):

(B)

SETTLEMENT
START        ENTER

USER ID:        d2af1apfa

PASSWORD:       aofau554

MONEY
AMOUNT (YEN):   25, 000

FIG. 12

(A)

ONE-TIME PASSWORD IS AS FOLLOWS

THIS ONE-TIME PASSWORD IS VALID
FOR FIVE MINUTES FROM NOW

0 1 5 6 3 8 9 4 4 5 1

(B)

SETTLEMENT YOU REQUESTED IS NOT
ALLOWED FOR THE FOLLOWING REASON

☐USER ID IS INCORRECT
☑PASSWORD IS INCORRECT
☐TERMINAL IS NOT REGISTERED
☐BALANCE IS INSUFFICIENT

FIG. 13

(A)

FINAL
CONFIRMATION          ( ENTER )

USER ID: [                    ]

OTP: [                    ]

(B)

FINAL
CONFIRMATION          ( ENTER )

USER ID: [      d2af1apfa      ]

OTP: [   0 1 5 6 3 8 9 4 4 5 1   ]

FIG. 14

| USER TERMINAL | SETTLEMENT DEVICE | SETTLEMENT TERMINAL |
|---|---|---|

START

START SETTLEMENT PROCESSING (S911)

INPUT USER ID, PASSWORD, AND MONEY AMOUNT INFORMATION (S912)

TRANSMIT USER ID, PASSWORD, MONEY AMOUNT INFORMATION, AND POSITION INFORMATION (S913) → RECEIVE USER ID, PASSWORD, MONEY AMOUNT INFORMATION, AND POSITION INFORMATION (S921)

EXECUTE CREDIT DETERMINATION (S922)

GENERATE PROVISIONAL PERMISSION INFORMATION (S923)

RECEIVE PROVISIONAL PERMISSION INFORMATION (S914) ← TRANSMIT PROVISIONAL PERMISSION INFORMATION (S924)

GENERATE ONE-TIME PASSWORD (S915)

INPUT USER ID AND ONE-TIME PASSWORD (S931)

RECEIVE USER ID AND ONE-TIME PASSWORD (S925) ← TRANSMIT USER ID AND ONE-TIME PASSWORD (S932)

EXECUTE DEFINITIVE DETERMINATION (S926)

GENERATE DEFINITIVE DETERMINATION DATA (S927)

TRANSMIT DEFINITIVE DETERMINATION DATA (S928) → RECEIVE DEFINITIVE DETERMINATION DATA (S933)

DISPLAY SETTLEMENT RESULT (S934)

END

FIG. 15

(A)

SETTLEMENTS
THAT CAN BE          ( ENTER )
CANCELED

☐   2015/9/15  19:21    ¥25,000

☐   2015/9/15  19:18    ¥2,600

(B)

SETTLEMENTS
THAT CAN BE          ( ENTER )
CANCELED

☑   2015/9/15  19:21    ¥25,000

☐   2015/9/15  19:18    ¥2,600

FIG. 16

(A)

SETTLEMENT
START          ( ENTER )

USER ID: [                    ]
PASSWORD: [                    ]
MONEY AMOUNT (YEN): [                    ]
PAYEE: [                    ]

(B)

SETTLEMENT
START          ( ENTER )

USER ID: [ d2af1apfa ]
PASSWORD: [ aofau554 ]
MONEY AMOUNT (YEN): [ 25, 000 ]
PAYEE: [ ⑲ BBB CAFE ]

FIG. 17

FIG. 18

FIG. 19

(A)

(B)

FIG. 20

(A)

(B)

FIG. 21

## INTERNATIONAL SEARCH REPORT

| International application No. |
| --- |
| PCT/JP2017/039934 |

**A. CLASSIFICATION OF SUBJECT MATTER**
Int.Cl. B42D25/29(2014.01)i, B42D25/309(2014.01)i

According to International Patent Classification (IPC) or to both national classification and IPC

**B. FIELDS SEARCHED**

Minimum documentation searched (classification system followed by classification symbols)
Int.Cl. B42D25/29, B42D25/309, G06Q50/00-50/34, G06K19/10-19/18

| Documentation searched other than minimum documentation to the extent that such documents are included in the fields searched | |
| --- | --- |
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2013-242856 A (NAKAJIMA, Chieko) 05 December 2013, paragraph [0043], fig. 5, 7, etc. (Family: none) | 1<br>2 |
| X<br>Y | JP 10-214320 A (DAINIPPON PRINTING CO., LTD.) 11 August 1998, claims, paragraphs [0016], [0037], fig. 3, etc. (Family: none) | 1, 3<br>2, 4-5 |
| X<br>Y | US 2006/0144924 A1 (STOVER, Merlin D.) 06 July 2006, paragraphs [0029]-[0030], [0033], fig. 2 & US 7040539 B1 | 3, 6<br>4-5 |
| X<br>Y | JP 2010-520094 A (NCR CORPORATION) 10 June 2010, paragraphs [0128]-[0134], fig. 6, etc. & WO 2008/107662 A1, paragraphs [0212]-[0219], fig. 6 | 2, 4-5 |

☐ Further documents are listed in the continuation of Box C.　　☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 06 March 2018 (06.03.2018) | 20 March 2018 (20.03.2018) |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
| --- | --- |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015243564 A
- JP 2015250700 A
- JP 2015256028 A